# EUROPÄISCHE PATENTSCHRIFT

(11) **EP 2 714 423 B1**
(45) Veröffentlichungstag und Bekanntmachung des Hinweises auf die Patenterteilung: **11.10.2017**
(21) Anmeldenummer: 12719690.5
(22) Anmeldetag: 04.05.2012
(51) Int. Cl.: B42D 25/455, B42D 25/46, B32B 37/02

(54) **VERFAHREN UND VORRICHTUNG ZUM HEISSPRÄGEN**
METHOD AND DEVICE FOR HOT STAMPING
PROCÉDÉ ET DISPOSITIF D'ESTAMPAGE À CHAUD

(30) Priorität: 24.05.2011 DE 102011103000
(43) Veröffentlichungstag der Anmeldung: 09.04.2014
(60) Teilanmeldung: 17188847.2
(73) Patentinhaber: Leonhard Kurz Stiftung & Co. KG, 90763 Fürth (DE)
(72) Erfinder: WENING, Jochen, 90522 Oberasbach (DE); MÜHLFELDER, Peter, 90522 Oberasbach (DE); PFORTE, Klaus, 90522 Oberasbach (DE)
(74) Vertreter: Louis Pöhlau Lohrentz
(86) Internationale Anmeldenummer: PCT/EP2012/058272
(87) Internationale Veröffentlichungsnummer: WO 2012/159871

(56) Entgegenhaltungen:
- EP-A1- 0 433 575
- EP-A2- 0 089 494
- EP-A2- 0 350 235
- WO-A1-99/24934
- WO-A1-2005/104026
- GB-A- 2 259 888

## Beschreibung

Die Erfindung betrifft ein Verfahren und eine Vorrichtung zum Heißprägen.

EP 0 433 575 A1 beschreibt eine Vorrichtung zum kostengünstigen Aufkleben von Marken aus einer auf einem Trägerband zugeführten und einem Substrat zugewandten Folie auf das Substrat, wobei die Marken mittels eines Stempels aufgeklebt werden. Der Arbeitszyklus des Stempels ist hierbei in eine Klebephase und eine Vorschubphase eingeteilt. Weiter enthält die Vorrichtung Einrichtungen zum Ab- und Aufwickeln des Trägerbandes sowie Einrichtungen zum Zu- und Wegführen des Substrats. Das Trägerband und das Substrat werden weiter durch mindestens eine Klebestation zwischen einem Stempelzylinder und einem Gegendruckzylinder hindurchgeführt, wobei das Substrat in der oder den Klebestationen eine vorbestimmte Vorschubgeschwindigkeit aufweist. Der Stempelzylinder weist hierbei wenigstens einen radial erhabenen glatten Stempel auf, dessen Stempelfläche Teil eines zum Stempelzylinder konzentrischen, auf dem Gegendruckzylinder ablaufenden Zylindermantels ist.

EP 0 089 494 A2 beschreibt ein Verfahren zum Prägen von flexiblen Materialbahnen mittels bandförmiger Heißprägefolien. Zur Erhöhung der Arbeitsgeschwindigkeit wird die Materialbahn mit der Heißprägefolie über eine größere Strecke entlang einer beheizten Oberfläche eines Stützkörpers geführt und Materialbahn und Heißprägefolie werden gemeinsam durch mehrere im Abstand von einander entlang der beheizten Oberfläche angeordnete Andruckrollen gegen die beheizte Oberfläche des Stützkörpers gedrückt. Hierdurch lässt sich eine Steigerung der Arbeitsgeschwindigkeit wenigstens auf das Fünffache erreichen. Eine Vorrichtung zur Durchführung des Verfahrens zeichnet sich durch die Anordnung eines Rollenkorbes aus, der so ausgebildet ist, dass die Rollen allmählich von innen nach außen fortschreitend an eine Prägewalze angelegt werden können. Der Antrieb der Prägewalze erfolgt erfindungsgemäß über eine Kupplung mit veränderlichem Drehmoment, beispielsweise eine Magnetpulverkupplung oder über eine elektronische Drehmomentregelung, insbesondere mittels einer Elektrischen Welle.

EP 0 350 235 A2 beschreibt ein Verfahren zur Herstellung einer elektronischen Karte. Dabei werden auf einer erste Deckschicht in einer Verfahrensschrittfolge ein elektrokonduktives Muster, verschiedene Komponenten einer Batterie, ein Separator und ein IC-Chip bereitgestellt und auf einer zweiten Deckschicht in einer weiteren Verfahrensschrittfolge weitere Komponenten der Batterie bereitgestellt. In einem letzten Verfahrensschritt werden die erste und die zweite Deckschicht übereinandergelegt, verklebt und auf eine vorbestimmte Größe zugeschnitten.

Der Erfindung liegt die Aufgabe zugrunde, ein verbessertes Verfahren zum Heißprägen und eine entsprechende Vorrichtung anzugeben.

Die Aufgabe wird gelöst durch ein Verfahren zum Heißprägen nach Anspruch 1 sowie eine Heißprägevorrichtung nach Anspruch 10.

Das Verfahren und die Vorrichtung eignen sich für ein Heißprägen von Sicherheitselementen auf eine Substratbahn, insbesondere eine Papierbahn zur Herstellung von Banknoten, in einem Hochgeschwindigkeitsprozess, z.B. mit einer Geschwindigkeit im Bereich von 1 m/min bis zu 500 m/min., insbesondere 80 m/min. bis zu 200 m/min.

Der Erfindung liegt ein Rollenkonzept zugrunde, d.h. ein Herstellungsverfahren von Rolle zu Rolle: eine Substratbahn wird von einer Vorratsrolle abgewickelt, in einem einzigen Durchlauf durch die Vorrichtung geführt, um in einer ersten Prägung, die in der ersten Prägestation vorgenommen wird, und in einer zweiten, die in der zweiten Prägestation vorgenommen wird, mittels mindestens einer Prägefolie mit Prägeschichten beprägt zu werden, und abschließend auf eine Speicherrolle aufgewickelt. Außer den Prägungen kann das Substrat dabei in der Vorrichtung noch mit weiteren Applikationen versehen bzw. weiteren Behandlungen unterzogen werden, wie Bedrucken mit Druckschichten, Anbringen von Fensteröffnungen, Bestrahlungen, Befeuchtungen.

Die mindestens eine Prägefolie kann zwei unterschiedliche Prägefolien umfassen, wobei in der ersten Prägung eine erste Prägefolie der zwei unterschiedlichen Prägefolien zumindest teilweise auf das Substrat geprägt wird, wodurch eine erste Prägeschicht auf dem Substrat ausgebildet wird, und in der zweiten Prägung eine zweite Prägefolie der zwei unterschiedlichen Prägefolien zumindest teilweise auf das Substrat geprägt wird, wodurch eine zweite Prägeschicht auf dem Substrat ausgebildet wird.

Alternativ ist es möglich, dass die mindestens eine Prägefolie lediglich eine einzige Prägefolie umfasst, wobei in der ersten Prägung die Prägefolie teilweise auf das Substrat geprägt wird, wodurch eine erste Prägeschicht auf dem Substrat ausgebildet wird, und in der zweiten Prägung der nach der ersten Prägung verbliebene Rest der Prägefolie zumindest teilweise auf das Substrat geprägt wird, wodurch eine zweite Prägeschicht auf dem Substrat ausgebildet wird.

Zumindest eine der mindestens einen Prägefolie kann als eine Transferfolie ausgebildet sein, die eine Trägerfolie und eine davon vorzugsweise mittels Wärme ablösbare und auf das Substrat transferierbare Übertragungslage aufweist. In diesem Fall verbleibt nach der Prägung lediglich die Übertragungslage in Form einer Prägeschicht auf dem Substrat, wohingegen die Trägerfolie von der Übertragungslage getrennt wird. Wird für die erste und/oder zweite Prägung eine als Transferfolie ausgebildete Prägefolie verwendet, so wird in der jeweiligen Prägung nur ein Teil der Prägefolie auf das Substrat aufgeprägt, nämlich die Übertragungslage.

Zumindest eine der mindestens einen Prägefolie kann als eine Laminierfolie mit Nutzschicht ausgebildet sein, die eine Trägerfolie und eine Nutzschicht, beispielsweise eine Dekorlage, sowie eine insbesondere wärmeaktivierbare Kleberschicht aufweist, welche zusammen in Form einer Prägeschicht auf dem Substrat angeordnet werden. Zumindest eine der mindestens einen Prägefolie kann als eine Laminierfolie ohne Nutzschicht ausgebildet sein, welche in Form einer Prägeschicht auf dem Substrat angeordnet wird. Wird für die erste und/oder zweite Prägung eine als Laminierfolie ausgebildete Prägefolie verwendet, so wird in der jeweiligen Prägung die gesamte Prägefolie auf das Substrat ausgeprägt.

Als Trägerfolie kann eine Polymerfolie dienen, z. B. aus Polyester, Polyethylenterephthalat (= PET), Polyethylennaphthalat (= PEN), Polyethylen (= PE), Polypropylen (= PP) oder Polycarbonat (= PC), bevorzugt mit einer Stärke von 6 µm bis 125 µm.

Bevorzugt weist die Prägefolie auf ihrer dem Substrat zugewandten Seite eine wärmeaktivierbare Klebeschicht auf, mittels der zumindest ein Teil der Prägefolie, d.h. die Prägeschicht, oder die gesamte Prägefolie auf dem Substrat befestigt wird. Es ist außerdem möglich, dass die Prägeschicht oder die Prägefolie auf ihrer dem Substrat abgewandten Seite eine Druckannahmeschicht aufweist, die die Eigenschaften der Prägeschicht oder der Prägefolie hinsichtlich Überdruckbarkeit, d.h. einer Haftung von Druckfarben auf der Prägeschicht oder der Prägefolie, verbessert.

Es ist möglich, dass die Übertragungslage einer als Transferfolie ausgebildeten Prägefolie in dem Prägevorgang vollflächig in Form eines vorzugsweise sich über den gesamten Nutzen erstreckenden Streifens auf das Substrat geprägt wird, wie es z. B. bei dem Folienstreifen der 5-, 10- und 20-Euro-Banknoten der ersten Serie der Eurobanknoten der Fall ist. Es ist ebenfalls möglich, dass die

Übertragungslage einer als Transferfolie ausgebildeten Prägefolie in dem Prägevorgang partiell in Form eines lokal begrenzten Folienelements, z. B. mit rundem, ovalem oder quadratischem Umriss, auf das Substrat geprägt wird, wie es z. B. bei dem Folienpatch der 50-, 100-, 200- und 500-Euro-Banknoten der ersten Serie der Eurobanknoten der Fall ist.

Es ist auch möglich, dass die Prägefolie eine Transferfolie mit heißprägbaren Etiketten ist, wie sie z. B. in der WO 2010/072 339 A2 beschrieben ist. Eine derartige Transferfolie umfasst eine Grundfolie, die eine erste Trägerfolie und eine ein- oder mehrschichtige Dekorlage aufweist, die von der ersten Trägerfolie abgetrennt werden kann. Auf die von der Dekorlage abgewandte Oberfläche der ersten Trägerfolie wird mittels einer ersten Klebstoffschicht eine zweite Trägerfolie aufgebracht, derart, dass die erste Klebstoffschicht zwischen der ersten Trägerfolie und der zweiten Trägerfolie angeordnet ist. Die erste Klebstoffschicht ist in einem ersten Bereich, der mindestens einen ersten Teilbereich der Grundfolie zumindest teilweise überdeckt, aktiviert, und in einem an diesen Bereich angrenzenden zweiten Bereich jedoch nicht aktiviert, nicht vorgesehen, lediglich teilweise vorgesehen oder deaktiviert. Die erste Trägerfolie wird entlang der den mindestens einen ersten Teilbereich definierenden und den mindestens einen ersten Teilbereich von einem zweiten Teilbereich der Grundfolie trennenden Grenzlinie mindestens teilweise durchtrennt. Ein den zweiten Teilbereich umfassender zweiter Teil der Grundfolie wird von der zweiten Trägerfolie abgezogen, wohingegen in dem mindestens einen ersten Teilbereich die Grundfolie aufgrund der aktivierten ersten Klebstoffschicht an der zweiten Trägerfolie haftet und ein den mindestens einen ersten Teilbereich umfassender erster Teil der Grundfolie auf der zweiten Trägerfolie verbleibt. Die Dekorlage des auf der zweiten Trägerfolie verbleibenden ersten Teils der Grundfolie bildet somit transferierbare Etiketten oder Label mit einer eigenen Trägerfolie, d.h. der ersten Trägerfolie, die auf einer Hilfsträgerfolie, d. h. der zweiten Trägerfolie, gehalten sind und von dort in einem Prägevorgang auf ein Substrat abgeprägt bzw. abgelöst werden. Bei kreisrundem Umriss werden diese transferierbare Etiketten als "Pillen" bezeichnet. Mit einer derartigen Prägefolie ist es möglich, ein Sicherheitselement bereit zu stellen, welches mittels eines üblichen Transferverfahrens auf ein Sicherheitsdokument, beispielsweise eine Banknote oder ein ID-Dokument, transferiert werden kann und welches ein durch ein unkontrolliertes Reißen der Dekorlage im Randbereich des transferierten Mehrschichtkörpers entstehendes "Ausfransen" vermeidet (ID = Identifikation). Die "Pillen" können insbesondere zum Verschließen einer Fensteröffnung in einem Substrat dienen.

Die Folie kann auf der Oberseite eine Druckannahmeschicht aufweisen, die die Eigenschaften der Folie hinsichtlich Überdruckbarkeit, d. h. die Haftung von Druckfarben, verbessert.

Als Substrat kann jedes bahnförmige Material dienen, das den beim Prägen im Rolle-zu-Rolle-Verfahren auftretenden, insbesondere mechanischen Belastungen widersteht. In der Praxis kommen dafür in erste Linie Fasersubstrate oder polymere Foliensubstrate in Frage. Als Banknotensubstrat eignen sich insbesondere einlagige oder mehrlagige Fasersubstrate wie Papier- oder Baumwollsubstrate, Laminate oder Extrudate aus einer Kombination von natürlichem Fasermaterial (z. B. Papier, Baumwolle) und Kunststoff, z. B. einem Verbund aus mehreren Lagen Papier bzw. Fasern und Kunststoff, sowie einlagige oder mehrlagige Kunststoffsubstrate. Eine bekannte Papier-Kunststoff-Kombination ist das Banknotenpapier Durasafe^{®} der Firma Landqart AG, Schweiz. Baumwolle-Kunststoff-Kombinationen für Banknoten werden z.B. von der Firma Giesecke&Devrient GmbH, Deutschland, angeboten. Ein bekanntes Kunststoffsubstrat ist das Banknotensubstrat Guardian^{®} der Firmen Securency International Pty Ltd., Australien, und Innovia Films, Vereinigtes Königreich.

Die Substratbahn ist in eine Vielzahl gleichartiger Segmente, auch Nutzen genannt, unterteilt, die auf der Substratbahn in Spalten entlang der Laufrichtung des Substrats und Zeilen quer zur Laufrichtung des Substrats angeordnet sind. Ein Nutzen kann z. B. in Form eine Banknote, ein Blatt eines Geschäftspapiers oder eine Ausweisseite bilden. Die Aufteilung der Substratbahn in Nutzen ist ein in der Drucktechnik üblicher Vorgang, um die zur Verfügung stehende Substratbahn optimal zur Bildung vieler gleichartiger Druckerzeugnisse auszunutzen.

Je nach ihrer Breite, z. B. ein bis zwei Meter, weist die Substratbahn eine bestimmte Anzahl von Nutzenspalten nebeneinander auf, z.B. drei bis acht Spalten. Jeder Nutzenspalte kann dabei eine bestimmte Anzahl von Prägespuren zugeordnet sein, d. h. auf jedem Nutzen sind eine bestimmte Anzahl von Prägeschichten anzubringen.

Bei herkömmlichen Prägemaschinen liegt der minimale Abstand zwischen zwei Prägespuren aus konstruktiven Gründen im Bereich von ca. 100 mm. Der Grund dafür sind die Abmessungen der Prägefolien-Zugwerke quer zur Laufrichtung des Substrats, d.h. die Breite der Bandführungen, Rollen und anderer Bauelemente, welche die Prägefolien beim Prägen führen und insbesondere eine Zugkraft auf die Prägefolie ausüben, um die Prägefolie straff zu halten und/oder um mittels der Zugkraft in geringem Maße die Längsposition der Prägefolie einstellen zu können. Die Folienzugwerke haben eine bestimmte, durch Mechanik, Motor, etc. bedingte Mindestbreite, die den minimalen Abstand zwischen zwei Prägespuren begrenzt und es nicht erlaubt, benachbarte Prägeschichten in einem wesentlich geringeren Abstand auf die Substratbahn zu prägen. Selbst bei einer in Laufrichtung des Substrats versetzten Anordnung benachbarter Folienzugwerke ist es nicht möglich, den minimalen Abstand zwischen zwei Prägespuren wesentlich zu verringern.

Will man bei herkömmlichen Prägemaschinen, die auf dem Bogen- oder dem Rollenkonzept basieren und lediglich eine einzige Prägestation aufweisen, eine Anzahl von Prägungen auf dem Substrat, d. h. einem Bogen oder einer Substratbahn, durchführen, welche die, wie oben beschrieben, in einem Durchlauf maximal möglichen Prägespuren übertrifft, so muss das Substrat nach einem ersten Prägevorgang in einem zweiten Prägedurchgang erneut durch dieselbe Maschine geführt werden. Durch diese beiden Durchgänge sinkt die endgültige Prozessgeschwindigkeit, d. h. die Ausstoßrate von Endprodukten, d. h. beprägtem Substrat, um mindestens 50 %.

Nachteilig bei diesen mehreren Durchgängen ist, neben der stark verringerten Prozessgeschwindigkeit und den ggf. nötigen Umrüstarbeiten an der einzigen Maschine, die nötige Zwischenlagerung des Substrats, das bei der Herstellung von Banknoten in der Regel als Papier oder aus anderen der vorgenannten natürlichen Fasersubstrate vorliegt. Papier oder auch andere natürliche Fasersubstrate "leben", d. h. verändern sich mit den Umweltbedingungen wie Luftfeuchte und Temperatur. Bei der Zwischenlagerung zwischen den beiden Durchgängen gelangt das Papier also in einen nicht näher kontrollierbaren Zustand, der anders ist als vor der ersten Prägung. Dadurch kann die zweite Prägung nicht mit denselben Bedingungen ablaufen wie die erste Prägung. Die Maschine muss ggf. zeitaufwendig auf die anderen Papiereigenschaften abgestimmt werden. Dennoch weist das Papier gleichzeitig mit den anderen Eigenschaften andere Maße auf, weil sich das Papier je nach Umweltbedingungen minimal verzieht, insbesondere nichtlinear in alle Raumrichtungen. Das bedeutet auch, dass ggf. die Genauigkeit wie Lagegenauigkeit oder Register zwischen erster und zweiter Prägung bzw. zwischen zweiter Prägung und dem Papier abnimmt.

Im Gegensatz zu herkömmlichen Prägemaschinen, die auf dem Bogen- oder dem Rollenkonzept basieren und nur eine einzige Prägestation aufweisen, treten bei der vorliegende Erfindung die oben angeführten Nachteile nicht auf.

Aufgrund der unterbrechungsfreien mehrfachen Prägung in zwei hintereinander angeordneten Prägestationen, d.h. einer "Inline-Produktion", ist mit der vorliegenden Erfindung gegenüber dem herkömmlichen Zweifach-Durchlauf eine erhebliche Steigerung der Prozessgeschwindigkeit, d. h. eine erhebliche Erhöhung der Ausstoßrate von Endprodukten, also fertig beprägtem Substrat erzielbar. Aufgrund der schnellen zeitlichen Abfolge, im Sekundenbereich, der beiden Prägeschritte liegen während der zweiten Prägung nahezu die gleichen Prägebedingungen vor wie während der ersten Prägung bzw. man hat eine sehr genaue Kenntnis über die aktuellen Eigenschaften des Papiers, weil die Umweltbedingungen zwischen der ersten und der zweiten Prägung nur unwesentlich schwanken. Aufgrund der Kenntnis der Eigenschaften des Papiers vor der ersten Prägung und der lediglich geringen Veränderung des Papiers seit der ersten Prägung, z. B. durch Feuchte, kann die zweite Prägung genau auf die bekannten Bedingungen eingestellt werden. Somit entfällt mit der vorliegenden Erfindung eine ggf. zeitaufwendige Abstimmung der Prägebedingungen auf stark veränderte und weitgehend unbekannte Papiereigenschaften. Gleichzeitig erhöht sich die die Genauigkeit zwischen erster und zweiter Prägung.

Erfindungsgemäß wird die Substratbahn und die ihr aufliegende Prägefolie über eine größere Strecke entlang der beheizten Oberfläche der Prägewalze geführt und Substratbahn und Prägefolie gemeinsam durch mehrere in Abstand voneinander entlang der beheizten Oberfläche angeordnete Andruckrollen gegeneinander und gegen die beheizte Oberfläche der Prägewalze gedrückt. Es sind somit hintereinander mehrere Spalte (engl.: nips) vorgesehen, durch die die Substratbahn mit der Prägefolie läuft, wobei in diesen Spalten jeweils ein Andruck der Prägefolie gegen die zu dekorierende Substratbahn durch eine Andruckrolle erfolgt. Der Vorteil einer derartigen Ausbildung der Prägestation, wie sie z. B. in der EP 0 089 494 A2 und der WO 2005/120 832 A1 beschrieben ist, besteht darin, dass die Substratbahn mit der Prägefolie auf dem Weg zwischen den einzelnen Spalten stets beheizt bleibt und somit keine Abkühlung in dem Zwischenraum zwischen den verschiedenen Andruckrollen erfolgt. Auf diese Weise kann eine erhebliche Arbeitsgeschwindigkeit erreicht werden, von über 150 m/min. Da keine Abkühlung der Substratbahn und der Prägefolie zwischen den einzelnen Andruckrollen stattfindet, besteht auch nicht die Gefahr, dass Verzerrungen des Dekorbildes auftreten. Man erreicht somit bei dieser Anordnung nicht nur eine erhebliche Arbeitsgeschwindigkeit, sondern gleichzeitig auch eine hohe Qualität der Prägung.

Vorteilhafte Ausgestaltungen der Erfindung sind in den Unteransprüchen bezeichnet.

Besonders bevorzugt ist es, wenn bei der ersten und/oder zweiten Prägung das Substrat und die auf dem Substrat aufliegende Prägefolie durch wenigstens zwei um die Prägewalze in Abstand voneinander angeordnete Andruckrollen gegeneinander und gegen die beheizte Oberfläche der ersten Prägewalze gedrückt werden. Dadurch ist eine erhebliche Steigerung der Arbeitsgeschwindigkeit möglich, weil der Flächenbereich, auf welchem Druck und Wärme auf die am Umfang der Prägewalze entlanggeführte und auf dem Substrat anliegende Prägefolie vergrößert ist. Durch den erhöhten Flächenbereich ist auch die Zeit, in der Druck und Wärme auf die Prägefolie einwirkt, verlängert und dadurch kann insbesondere die Klebstoffschicht und gegebenenfalls eine Ablöseschicht der Prägefolie ausreichend aktiviert werden, um insbesondere eine besonders gute Haftung der Prägefolie auf dem Substrat und/oder eine besonders gute Ablösung der Übertragungslage einer als Transferfolie ausgebildeten Prägefolie zu erreichen.

Unter diesen Aspekten ist es eine bevorzugte Weiterbildung der erfindungsgemäßen Vorrichtung, wenn die erste Prägestation wenigstens zwei um die erste Prägewalze umfasst in Abstand voneinander angeordnete erste Andruckrollen umfasst, durch die das Substrat und die ihm aufliegende Prägefolie der mindestens einen Prägefolie am Umfang der ersten Prägewalze entlangführbar und somit zumindest ein Teil der dem Substrat aufliegenden Prägefolie in Form der ersten Prägeschicht auf das Substrat prägbar ist und/oder wenn die zweite Prägestation wenigstens zwei um die zweite Prägewalze umfasst in Abstand voneinander angeordnete zweite Andruckrollen umfasst, durch die das einfach beprägte Substrat und die ihm aufliegende Prägefolie der mindestens einen Prägefolie am Umfang der zweiten Prägewalze entlangführbar und somit zumindest ein Teil der dem Substrat aufliegenden Prägefolie in Form der zweiten Prägeschicht auf das Substrat prägbar ist.

Gemäß einer bevorzugten Weiterbildung der Erfindung wird das Substrat vor der ersten Prägung und/oder zwischen der ersten und zweiten Prägung und/oder nach der zweiten Prägung mit mindestens einer Druckschicht bedruckt. Dabei kann eine Druckschicht zwischen dem Substrat und der ersten Prägeschicht angeordnet werden und/oder zwischen der ersten und zweiten Prägeschicht und/oder auf der zweiten Prägeschicht. Es ist bevorzugt, dass die Heißprägevorrichtung zu diesem Zweck mindestens bezogen auf die Laufrichtung des Substrats vor der ersten Prägestation und/oder zwischen der ersten und zweiten Prägestation und/oder bezogen auf die Laufrichtung des Substrats nach der zweiten Prägestation angeordnetes Druckwerk zum Applizieren mindestens einer Druckschicht auf dem Substrat umfasst. Druckwerke zum Drucken von Farbe oder funktionellen Schichten in Offset, Siebdruck, Tiefdruck oder Inkjet können an einer beliebigen Position und vorzugsweise unabhängig von den Prägestationen innerhalb der Heißprägevorrichtung, d. h. zwischen einem eventuellen Auf- und Abwickeln, angeordnet sein, um das Substrat und/oder eine aufgeprägte Prägeschicht zwischen den Prägevorgängen zu bedrucken.

Gemäß einer bevorzugten Weiterbildung der Erfindung wird die mindestens eine Druckschicht in einem zu beprägenden Bereich und/oder in einem beprägten Bereich des einfach und/oder zweifach beprägten Substrats angeordnet. Mit den erfindungsgemäß mehreren Prägestationen ist es nun möglich, dass die erste Prägeschicht nicht nur auf dem Substrat unterdruckt wird, d. h. eine Druckschicht vor der ersten Prägung auf das Substrat aufgebracht wird, sondern auch überdruckt wird, d.h. eine Druckschicht nach der ersten Prägung auf die erste Prägeschicht aufgebracht wird, und anschließend die auf die erste Prägeschicht aufgebrachte Druckschicht wiederum überprägt wird, z. B. um die Druckschicht zu versiegeln. Ebenso ist es möglich, die zweite Prägeschicht wiederum zu überdrucken. Dadurch sind beliebige Sandwichaufbauten aus Druckschichten und Prägeschichten möglich, z. B. der Schichtaufbau Druckschicht / Prägeschicht / Druckschicht / Prägeschicht / Druckschicht, wobei deren registergenaues Zusammenspiel vorzugsweise neue optische und/oder funktionale Effekte erzeugt.

Als Druckschicht kann ein Dekor bzw. ein Sicherheitsdruck, sichtbar oder unsichtbar (IR-/ UV-fluoreszierend), aufgebracht werden, z. B. ein Iriodin^{®}-Streifen zur Ausbildung eines blickwinkelabhängigen Perlglanzeffekts. Als Druckschicht können auch funktionale Schichten aufgebracht werden, d.h. Primerschichten, Klebstoffschichten, Haftvermittlerschichten, Druckannahmeschichten, Schmutzabweiserschichten, Imprägnierschichten, Schutzlackschichten, Replizierlackschichten, Effektpigmentschichten, etc.

Gemäß der Erfindung wird das Substrat zwischen der ersten und zweiten Prägung in einer Wendestation gewendet. Die Heißprägevorrichtung umfasst zu diesem Zweck eine zwischen der ersten und zweiten Prägestation angeordnete Wendestation zum Wenden des Substrats. Die Wendestation kann als ein Wendekreuz ausgebildet sein. Im Falle einer aktivierten Wendestation können trotz eines gleichsinnigen Umlaufs der Prägewalzen die erste und zweite Prägung auf gegenüberliegenden Seiten des Substrats erfolgen. Eine erste Prägung erfolgt auf einer ersten Seite des Substrats und eine zweite Prägung auf einer der ersten Seite gegenüber liegenden, zweiten Seite des Substrats. Wird die Wendestation deaktiviert oder umgangen, wird die zweite Prägung auf derselben Seite wie die erste Prägung ausgeführt.

Gemäß einer bevorzugten Weiterbildung der Erfindung wird in dem Substrat vor der ersten Prägung und/oder zwischen der ersten und zweiten Prägung und/oder nach der zweiten Prägung mindestens eine Fensteröffnung ausgebildet. Es ist bevorzugt, dass die Heißprägevorrichtung zu diesem Zweck eine bezogen auf die Laufrichtung des Substrats vor der ersten Prägestation und/oder zwischen der ersten und zweiten Prägestation und/oder bezogen auf die Laufrichtung des Substrats nach der zweiten Prägestation angeordnete Einheit zur Ausbildung der mindestens einen Fensteröffnung in dem Substrat umfasst. Es hat sich bewährt, wenn die Einheit zur Herstellung der mindestens einen Fensteröffnung durch eine Stanzeinheit, insbesondere einen rotierenden Stanzzylinder, eine Laserschneideinheit oder eine Wasserstrahlschneideinheit gebildet wird. Dabei sind beispielsweise die Abstände zwischen einzelnen in dem Substrat gebildeten Fensteröffnungen bei Verwendung eines Stanzzylinders vorgegeben und wiederholen sich gemäß dem Umfang des Stanzzylinders kontinuierlich. Dabei kann die Position des Stanzzylinders sowie dessen Rotationsgeschwindigkeit gesteuert werden. Es ist aber genauso möglich, dass ein nicht rotierendes Stanzwerkzeug verwendet wird. Es ist ebenso möglich, dass die Fensteröffnungen bereits während der Herstellung des Substrats in das Substrat eingebracht werden, insbesondere während der Papierherstellung durch entsprechende Ausgestaltung der Papiersiebe. Derartige Fensteröffnungen weisen meist charakteristische ausgefranste Ränder auf, je nach Beschaffenheit des Substrat-Materials. Solche Fensteröffnungen können mittels der Stanzeinheit vollständig oder teilweise überstanzt werden.

Gemäß einer bevorzugten Weiterbildung der Erfindung wird vor der ersten Prägung und/oder zwischen der ersten und zweiten Prägung auf bzw. in dem Substrat eine Registermarke aufgedruckt und/oder eine Steueröffnung ausgebildet und eine Positionierung der ersten Prägeschicht und/oder zweiten Prägeschicht entlang der Laufrichtung des Substrats, d.h. im Längsregister, anhand der Registermarke bzw. der Steueröffnung gesteuert. Die Registermarke kann auch ein in dem Substrat vorhandenes Wasserzeichen sein, welches während der Substratherstellung erzeugt wurde. Die Registermarke kann auch aus einer Kombination aus gedruckter Registermarke und/oder Wasserzeichen und/oder Steueröffnung gebildet sein. Auch das Einbringen der vorgehend beschriebenen Fensteröffnung kann anhand der Registermarke bzw. der Steueröffnung gesteuert erfolgen. Es ist bevorzugt, dass die Heißprägevorrichtung und/oder die Stanzeinheit zu diesem Zweck wenigstens einen Sensor zur Detektierung eines auf bzw. in dem Substrat angeordneten, als Registermarke fungierenden Merkmals umfasst. Der Sensor kann als ein Kamerasystem oder eine Registermarken-Leseeinrichtung zur optischen Erfassung der Registermarke ausgebildet sein, dessen Signale einer Regelungseinrichtung zugeführt werden.

Ein Registermarke ist eine auf dem Substrat angebrachte Markierung, die in einem nachfolgenden Verfahrensschritt bzw. Behandlungsschritt des Substrats wie Bedrucken, Beprägen oder Ausbilden einer Fensteröffnung zur Steuerung der Position einer dem Verfahrens- bzw. Behandlungsschritt entsprechenden Applikation wie Druckschicht, Prägeschicht oder Fensteröffnung auf dem Substrat dient. Eine Registermarke kann als ein aufgedrucktes Registerkreuz ausgebildet sein. Eine Steueröffnung ist eine im Substrat ausgebildete Fensteröffnung, die als Registermarke dient. Eine Steueröffnung kann als eine Registerlochung ausgebildet sein. Durch derartige Registermarken oder Steueröffnungen ist es möglich, eine vorgegebene Lagegenauigkeit von Applikationen wie Druckschicht, Prägeschicht oder Fensteröffnung auf dem Substrat, bezogen auf eine Bahn- bzw. Nutzen-Außenkante, einzuhalten. In diesem Fall spricht man von Registerhaltigkeit der auf dem Substrat angeordneten Applikationen. Der Begriff Register umfasst auch eine Lagegenauigkeit von Applikationen auf Vorder- und Rückseite einer Substratbahn zueinander. Im Schön- und Widerdruck spricht man auch von Wenderegister. Im Mehrfarbendruck bezeichnet Register, insbesondere Farbregister, auch die Lage der Farbauszüge zueinander. In Maschinenlaufrichtung bzw. Laufrichtung des Substrats spricht man von Umfangs- oder Längsregister, quer dazu von Quer- oder Seitenregister.

Das Seitenregister, d. h. die Registrierung in Querrichtung, der Applikationen auf dem Substrat, z.B. darauf angeordneter Druck- und Prägeschichten und darin eingebrachter Öffnungen, ist in der Regel immer gegeben und vorhanden. Dazu wird die Position der Applikation wie einer Prägespur relativ zum Papier gesteuert und so eingestellt, dass die Prägespur exakt in einem definierten Abstand zu einem Rand eines Nutzens verläuft. Die Prägespur verläuft also immer an derselben Querposition auf dem Substrat. Dies kann durch eine Bahnkantensteuerung der Heißprägevorrichtung sichergestellt werden, die mittels Anschlagsschienen dafür sorgt, dass das Substrat in exakter Ausrichtung in die nächste Station einläuft.

Hinsichtlich des Längsregisters, d.h. der Lagegenauigkeit zwischen zwei unterschiedlichen Applikationen auf dem Substrat in Längsrichtung, gibt es verschiedene Möglichkeiten. Es ist möglich, dass eine Applikation wie eine Prägespur in Längsrichtung entweder unregistriert, d.h. fortlaufend ohne Bezug zu ggf. vorhandenen Längs-Registermarken, auf dem Substrat angeordnet wird, oder im Register zu Längs-Registermarken auf dem Substrat angeordnet wird.

Es ist möglich, dass die erste Prägung in Längsrichtung unregistriert erfolgt, während die zweite Prägung registriert erfolgt. Dabei kann als Registermarke ein außerhalb der Nutzfläche gestanztes Steuerfenster dienen, das vorzugsweise gleichzeitig mit einer innerhalb der Nutzfläche gestanzten Fensteröffnung ausgebildet wird. Die Registermarke kann aber auch ein in einem Papiersubstrat vorhandenes Wasserzeichen oder eine auf das Substrat gedruckte Markierung sein, die z. B. mittels Inkjet aufgebracht wird.

Es ist auch möglich, dass bereits vor der ersten Prägung eine Registermarke auf und/oder in dem Substrat angebracht wird, z. B. in demselben Druckschritt, mit dem ein Sicherheitsdruck auf das Substrat aufgebracht wird, und die erste Prägung sowie die zweite Prägung anhand dieser Registermarke registergenau erfolgt.

Falls eine Ist-Position einer auf das Substrat aufzubringenden Prägeschicht oder einer anderen Applikation wie einer Druckschicht oder einer Fensteröffnung eine Abweichung von einer Soll-Position aufweist, muss eine Korrektur der Position relativ zu dem Substrat erfolgen. Es ist bevorzugt, dass die Heißprägevorrichtung zu diesem Zweck eine Positionierungseinheit zur Ausrichtung und/oder Korrektur einer Position des Substrats und/oder der mindestens einen Prägefolie aufweist. Beispielsweise verschiebt die Positionierungseinheit eine Prägefolie um eine vorgegebene Strecke relativ zur Substratbahn. Es ist ebenso möglich, dass die Positionierungseinheit mittels unterschiedlicher Zugkräfte und daraus resultierender Dehnung der Prägefolie die Position der Prägefolie entlang der Laufrichtung des Substrats steuert.

Gemäß einer bevorzugten Weiterbildung der Erfindung wird eine Positionierung der zweiten Prägeschicht entlang der Laufrichtung des Substrats, d. h. im Längsregister, anhand eines Designmerkmals und/oder einer Registermarke gesteuert, das bzw. die in der ersten Prägeschicht vorhanden ist.

Dabei wird bei der zweiten Prägung als Bezugspunkt nicht eine unmittelbar auf bzw. in dem Substrat angebrachte, vorzugsweise aufgedruckte oder eingestanzte, Registermarke verwendet, sondern ein vorzugsweise optisch detektierbares Designmerkmal und/oder eine Registermarke, die mit der ersten Prägeschicht auf das Substrat aufgebracht wurde. Dieses Designmerkmal und/oder diese Registermarke in der ersten Prägeschicht dient als Registermarke für die zweite Prägung. Auf diese Weise kann die Lagegenauigkeit zwischen erster und zweiter Prägeschicht verbessert werden. Es ist möglich, dass eine Prägeschicht lediglich als eine Registrierungsschicht fungiert, welche Registermarken aufweist, aber kein Design. Diese Prägeschicht wird als eine entlang den Rand des Substrats oder zwischen Nutzbereichen des Substrats verlaufende Prägespur auf das Substrat aufgeprägt, und stellt Registermarken für alle in der zweiten Prägung parallel aufzuprägenden Prägespuren bereit.

Es ist auch möglich, dass die Steuerung der Positionierung der in der zweiten Prägung aufgeprägten Prägeschicht anhand von Koordinaten erfolgt, die sich aus einer Kombination einer unmittelbar auf bzw. in dem Substrat angebrachten Registermarke und einer Registermarke ergeben, die in der mit der ersten Prägeschicht auf das Substrat aufgebracht wurde. Es ist dabei möglich, dass Koordinaten von Registermarken auf dem Substrat und auf der ersten Prägeschicht detektiert werden, die detektierten Koordinaten interpoliert werden und anhand des interpolierten Werts die zweite Prägung gesteuert wird.

Gemäß einer bevorzugten Weiterbildung der Erfindung bildet die erste Prägeschicht mindestens eine erste Prägespur auf dem Substrat aus, während die zweite Prägeschicht mindestens eine zweite Prägespur auf dem Substrat ausbildet, welche relativ zu der mindestens einen ersten Prägespur quer zur Laufrichtung des Substrats versetzt angeordnet ist. Durch den räumlichen Abstand der ersten und zweiten Prägestation in Laufrichtung des Substrats ist es möglich, die bei herkömmlichen Prägemaschinen vorhandenen Beschränkungen in Bezug auf den Mindestabstand benachbarter Prägespuren aufzulösen. In einem einzigen Durchlauf des Substrats können benachbarte Prägespuren beliebig nahe zueinander und aufgrund der schnellen zeitlichen Abfolge der Beprägungen in hoher relativer Lagegenauigkeit auf das Substrat aufgeprägt werden.

Die erste Prägeschicht wird in der ersten Prägestation auf dem Substrat aufgeprägt, die zweite Prägeschicht wird in der zweiten Prägestation auf dem Substrat aufgeprägt, wobei ein beliebiger Versatz der zweite Prägeschicht relativ zu der erste Prägeschicht quer zur Laufrichtung des Substrats einstellbar ist.

Beispielsweise ist es möglich, dass man in der ersten Prägung auf einer Substratseite eine bestimmte Anzahl von Prägespuren prägt, z. B. drei bis acht Spuren, und in der zweiten Prägung auf derselben Substratseite wiederum dieselbe Anzahl von Prägespuren prägt, aber versetzt zu den ersten Spuren innerhalb des Mindestabstands. Auf diese Weise ist es möglich, entweder mehr Spuren auf einen Nutzen wie eine Banknote als herkömmlich aufzubringen oder auch Nutzen kleinerer Abmessungen wie kleinere Banknoten mit jeweils einer Spur zu beprägen, was aufgrund der bei herkömmlichen Prägemaschinen vorhandenen Beschränkungen in Bezug auf den Mindestabstand nicht möglich ist. Auf der Substratbahn sind somit in einem einzigen Durchlauf doppelt so viele Spuren möglich wie bisher, und die Spuren liegen enger beieinander als es die eigentliche Maschinenbeschränkung bei herkömmlichen Prägemaschinen mit einer einzigen Prägestation zulässt. Die zweiten Spuren können in Längsrichtung des Substrats an die ersten Spuren direkt angrenzen und/oder mit den ersten Spuren zumindest teilweise überlappen. Insbesondere kann dadurch eine eng benachbarte und/oder überlappende Position von mehreren Sicherheitselementen bzw. Folienelementen auf dem Substrat erreicht werden, wenn die Übertragungslage einer als Transferfolie ausgebildeten Prägefolie in dem Prägevorgang partiell in Form eines lokal begrenzten Folienelements, z. B. mit rundem, ovalem oder quadratischem Umriss, auf das Substrat geprägt wird.

Gemäß einer bevorzugten Weiterbildung der Erfindung weisen die erste und/oder zweite Prägeschicht und/oder eine weitere Schicht, die auf eine andere Weise als durch Prägen auf dem Substrat angeordnet, insbesondere aufgedruckt, wurde, strahlungshärtbare Bestandteile auf, welche nach deren Aufprägen bzw. Applizieren auf das Substrat durch energiereiche Strahlung gehärtet werden. Es ist bevorzugt, dass die Heißprägevorrichtung zu diesem Zweck eine Strahlungseinheit zur Bestrahlung des Substrats umfasst. Als Strahlung findet vorzugsweise UV-Strahlung oder Teilchenstrahlung, z.B. Elektronenstrahlung, Verwendung. Dabei ist es möglich, dass die erste und/oder zweite Prägung mit Prägeschichten erfolgt, die UV-härtbare Lacke aufweisen, die aber noch nicht endgehärtet sind. Weiterhin ist es dabei möglich, dass beim Drucken Druckfarben verwendet werden, die UV-härtbare Lacke aufweisen, die aber noch nicht endgehärtet sind. Erst nach der Prägung erfolgt eine Nach- bzw. Endhärtung (engl.: postcuring). Damit ist es beispielsweise möglich, auf dem Substrat überlappend Druck/Folie und/oder Folie/Folie vorzusehen und diese überlappenden Schichtaufbauten nach deren Applikation auf das Substrat zu härten.

Dadurch ist es möglich, dass eine verbesserte chemische und/oder physikalische und/oder mechanische Verbindung von Schichten eines auf dem Substrat angeordneten Schichtaufbaus nach deren Applikation auf das Substrat untereinander erreicht wird. Auch miteinander reagierende Bestandteile der Schichten sind denkbar. Es ist weiter möglich, dass im nicht gehärteten/fixierten Zustand die Schichten miteinander zu einem weiteren Zustand reagieren, der dann durch eine Bestrahlung fixiert wird. Ein derartiges Verfahren kann nur in einem schnellen Inline-Prozess erfolgen, bei dem eine Zwischenlagerung zwischen zwei Prägungen, wie sie bei herkömmlichen Prägemaschinen, die lediglich eine einzige Prägestation aufweisen, unvermeidbar ist, hinderlich wäre.

Es ist auch möglich, dass dabei die aufzuprägenden Prägefolien mit Linern, d. h. Abdeckschichten, gegen Beschädigung geschützt werden, die vor dem Prägen abgezogen werden. Die Prägefolien können dabei z. B. flüssige, wachsartige, pulverförmige oder plättchenförmige (engl.: flake) Bestandteile oder kleine Einzelelemente aufweisen wie Chips (ICs = Integrated Circuits), die zwischen Präge- bzw. Druckschichten eingekapselt werden. Ein bevorzugtes Beispiel hierzu ist ein Display, z. B. ein LC-Display oder ein PDLC-Display, vorzugsweise aus einem flüssigen oder wachsartigen Flüssigkristall-Material (LC = Liquid Crystal; PDLC = Polymer Dispersed Liquid Crystal), oder ein flüssiges, wachsartiges oder pulverförmiges e-ink-Display.

Gemäß einer bevorzugten Weiterbildung der Erfindung wird nach der ersten Prägung mindestens ein funktionelles Element auf der ersten Prägeschicht angeordnet, welches durch die zweite Prägung zwischen der ersten und zweiten Prägeschicht eingekapselt wird. Es ist auch möglich, dass Einzelelemente nach einer ersten Prägung auf dem Substrat platziert und anschließend in einer zweiten Prägung zwischen zwei Prägeschichten eingekapselt werden. Es ist bevorzugt, dass die Heißprägevorrichtung zum Platzieren von Einzelelementen auf dem Substrat eine Bestückungsvorrichtung umfasst.

Dabei ist es von Vorteil, wenn die erste Prägeschicht auf einer ersten Seite des Substrats eine das Substrat durchdringende Fensteröffnung überspannend ausgebildet wird, das mindestens ein funktionelles Element von einer der ersten Seite gegenüberliegenden zweiten Seite des Substrats her in der Fensteröffnung angeordnet wird, und die zweite Prägeschicht auf der zweiten Seite des Substrats die Fensteröffnung überspannend ausgebildet wird. Durch die Platzierung eines funktionellen Elements wie eines IC-Chips in einer Fensteröffnung oder einer ähnlichen Aussparung im Substrat - das Element liegt also in einer Verüefung - wird ein dickenmäßiges "Aufbauen" vermieden oder verringert.

Gemäß einer bevorzugten Weiterbildung der Erfindung wird die zweifach beprägte Substratbahn bezogen auf die Laufrichtung des Substrats nach der ersten Prägestation und/oder der zweiten Prägestation befeuchtet. Es ist bevorzugt, dass die Heißprägevorrichtung zu diesem Zweck eine Befeuchtungsstation umfasst. Eine derartige Rückbefeuchtung nach einem Prägevorgang ist insbesondere bei einer Heißprägung auf ein Papiersubstrat vorteilhaft, da dem Papier auf diese Weise die ihm beim Prägen durch Druck und Wärme entzogene Feuchtigkeit wieder zugeführt werden kann. Eine definierte Restfeuchte in einem Papiersubstrat ist für eine bestimmte Elastizität des Substrats unverzichtbar.

Im Folgenden wird die Erfindung anhand mehrerer Ausführungsbeispiele unter Zuhilfenahme der beiliegenden Zeichnung erläutert. Es zeigen:
- Fig. 1a-1c: drei unterschiedliche Ausführungsbeispiele einer Heißprägevorrichtung in schematischer Darstellung,
- Fig. 2: eine schematische Darstellung einer Heißprägevorrichtung, in der eine Substratbahn eine Abfolge verschiedener Stationen durchläuft,
- Fig. 3: einen schematischen Schnitt einer Prägewalze mit Andruckrollen,
- Fig. 4a-b: zeigt eine schematische Draufsicht auf eine Substratbahn, die eine erste und eine zweite Prägestation durchläuft.
- Fig. 5: eine schematische Draufsicht auf eine Substratbahn, die eine erste und eine zweite Prägestation durchläuft,
- Fig. 6a-c: schematische Schnitte beprägter und bedruckter Substratbahnen nach Durchlaufen einer ersten und einer zweiten Prägestation, und
- Fig. 7a-b: schematische Schnitte beprägter und mit einem Einzelelement bestückter Substratbahnen nach Durchlaufen einer ersten und einer zweiten Prägestation.

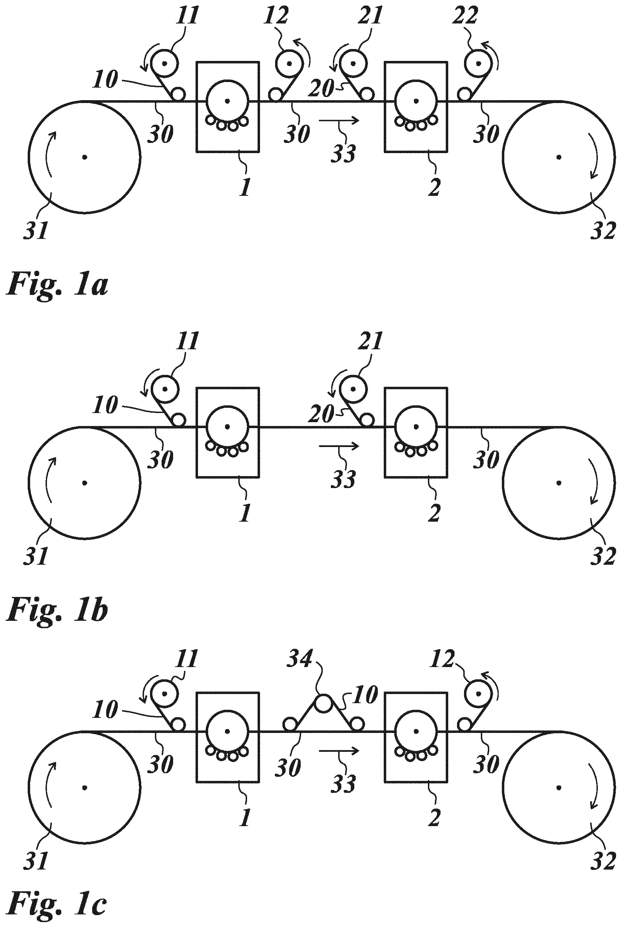

Fig. 1a zeigt eine Heißprägevorrichtung, bei der die erste und zweite Prägestation mit je einer unterschiedlichen Transferfolie betrieben werden. Die Heißprägevorrichtung umfasst eine Vorratsrolle 31, von der eine Substratbahn 30 abgerollt wird, eine erste Prägestation 1 und eine zweite Prägestation 2, welche das Substrat 30 in dieser Reihenfolge durchläuft, und eine Speicherrolle 32, auf welche die zweifach beprägte Substratbahn 30 aufgerollt wird. Bevor die Substratbahn 30 in die erste Prägestation 1 einläuft, wird sie mit einer als Transferfolie ausgebildeten ersten Prägefolie 10 zusammengeführt, die von einer ersten Abwickelrolle 11 abgerollt wird. In der schematischen Zeichnung ist zur Vereinfachung lediglich eine einzige erste Abwickelrolle 11 dargestellt, in der Praxis sind aber in der Regel mehrere erste Abwickelrollen parallel angeordnet, entsprechend der Anzahl der auf die Substratbahn 30 aufzuprägenden ersten Prägefolien.

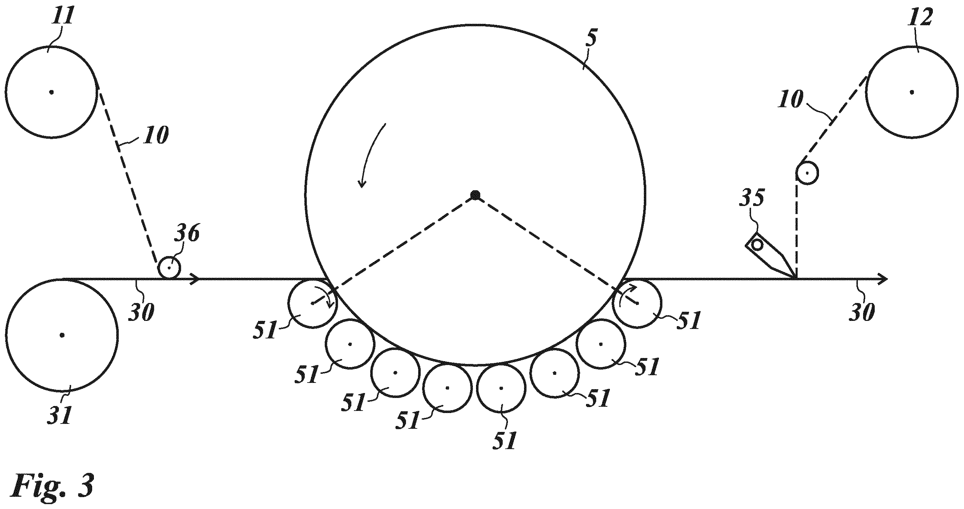

Die Substratbahn 30 mit der ihr aufliegenden Transferfolie 10 wird um eine beheizte Prägewalze der ersten Prägestation 1 geführt und durch Andruckrollen mit einem einstellbaren Druck gegeneinander und gegen die beheizte Oberfläche der Prägewalze gedrückt. Die Prägewalze und die Andruckrollen sind in den Fig. 1a bis 1c nur schematisch gezeichnet. Eine nähere Beschreibung der Prägewalze und der Andruckrollen findet sich in der Figurenbeschreibung zu Fig. 3.

Durch den Druck und die Wärme, die in der ersten Prägestation 1 auf die Substratbahn 30 mit der ihr aufliegenden Transferfolie 10 wirken, werden eine Klebstoffschicht, die auf der dem Substrat 30 zugewandten Seite der Transferfolie 10 angeordnet ist, und eine Ablöseschicht der Transferfolie 10 aktiviert. Dadurch verbindet die Klebstoffschicht eine Übertragungslage der Transferfolie 10 mit der Substratbahn 30, und eine Trägerfolie der Transferfolie 10 kann von der Übertragungslage abgelöst werden, nachdem die Substratbahn 30 die erste Prägestation 1 durchlaufen hat. Dieses Ablösen erfolgt dadurch, dass die Trägerfolie durch eine Umlenkrolle von der Substratbahn 30 weg und zu einer ersten Aufwickelrolle 12 hin geführt wird, auf welche sie aufgewickelt wird. In der schematischen Zeichnung ist zur Vereinfachung lediglich eine einzige erste Aufwickelrolle 12 dargestellt, in der Praxis sind aber in der Regel mehrere erste Aufwickelrollen parallel angeordnet, entsprechend der Anzahl der auf die Substratbahn 30 aufzuprägenden ersten Prägefolien. Auf der Substratbahn 30 verbleibt die Übertragungslage der Transferfolie 10 als erste Prägeschicht.

Die somit einfach beprägte Substratbahn 30 wird, bevor sie in die zweite Prägestation 2 einläuft, mit einer als Transferfolie ausgebildeten zweiten Prägefolie 20 zusammengeführt, die von einer zweiten Abwickelrolle 21 abgerollt wird. Die oben zu dem ersten Prägevorgang an der ersten Prägestation 1 gegebenen Erläuterungen gelten in entsprechender Weise auch für den zweiten Prägevorgang an der zweiten Prägestation 2. Die nach dem Verlassen der zweiten Prägestation 2 zweifach beprägte Substratbahn 30 wird schließlich auf die Speicherrolle 32 aufgewickelt.

Fig. 1b zeigt eine Heißprägevorrichtung, bei der die erste und zweite Prägestation mit je einer unterschiedlichen Laminierfolie betrieben werden. Die Heißprägevorrichtung umfasst eine Vorratsrolle 31, von der eine Substratbahn 30 abgerollt wird, eine erste Prägestation 1 und eine zweite Prägestation 2, welche das Substrat 30 in dieser Reihenfolge durchläuft, und eine Speicherrolle 32, auf welche die zweifach beprägte Substratbahn 30 aufgerollt wird. Bevor die Substratbahn 30 in die erste Prägestation 1 einläuft, wird sie mit einer als Laminierfolie ausgebildeten ersten Prägefolie 10 zusammengeführt, die von einer ersten Abwickelrolle 11 abgerollt wird. In der schematischen Zeichnung ist zur Vereinfachung lediglich eine einzige erste Abwickelrolle 11 dargestellt, in der Praxis sind aber in der Regel mehrere erste Abwickelrollen parallel angeordnet, entsprechend der Anzahl der auf die Substratbahn 30 aufzuprägenden ersten Prägefolien.

Die Substratbahn 30 mit der ihr aufliegenden Laminierfolie 10 wird um eine beheizte Prägewalze der ersten Prägestation 1 geführt und durch Andruckrollen mit einem einstellbaren Druck gegeneinander und gegen die beheizte Oberfläche der Prägewalze gedrückt. Durch den Druck und die Wärme, die in der ersten Prägestation 1 auf die Substratbahn 30 mit der ihr aufliegenden Laminierfolie 10 wirken, wird eine Klebstoffschicht, die auf der dem Substrat 30 zugewandten Seite der Laminierfolie 10 angeordnet ist, aktiviert. Dadurch verbindet die Klebstoffschicht die Laminierfolie 10 mit der Substratbahn 30. Auf der Substratbahn 30 verbleibt die Laminierfolie 10 als erste Prägeschicht.

Nach der ersten Prägestation 1 können weitere, hier nicht näher dargestellte Arbeitsschritte ausgeführt werden bzw. Bearbeitungsstationen durchlaufen werden, beispielsweise in einer Stanzeinheit das Stanzen einer Fensteröffnung in die Substratbahn 30 und in die darauf fixierte Laminierfolie 10. Anschließend durchläuft die Substratbahn 30 eine Wendestation und wird dort gewendet, sodass der zweite Prägevorgang in der zweiten Prägestation 2 auf der anderen Seite der Substratbahn 30 als der erste Prägevorgang erfolgt und insbesondere die Fensteröffnung überdeckt und/oder wieder verschließt.

Die somit einfach beprägte Substratbahn 30 wird, bevor sie in die zweite Prägestation 2 einläuft, mit einer als Laminierfolie ausgebildeten zweiten Prägefolie 20 zusammengeführt, die von einer zweiten Abwickelrolle 21 abgerollt wird. Die oben zu dem ersten Prägevorgang an der ersten Prägestation 1 gegebenen Erläuterungen gelten in entsprechender Weise auch für den zweiten Prägevorgang an der zweiten Prägestation 2. Erfolgt der zweite Prägevorgang auf der der ersten Laminierfolie 10 gegenüberliegenden Seite der Substratbahn 30, kann es insbesondere für das Verschließen einer Fensteröffnung in der Substratbahn 30 und in der Laminierfolie 10 vorteilhaft sein, wenn die Laminierfolie 20 senkrecht zur Substratbahn 30 gesehen weitgehend deckungsgleich zu der Laminierfolie 10 angeordnet ist bzw. weitgehend dieselben Flächenbereiche der Substratbahn 30 bedeckt. Die nach dem Verlassen der zweiten Prägestation 2 zweifach beprägte Substratbahn 30 wird schließlich auf eine Speicherrolle 32 aufgewickelt.

Fig. 1c zeigt eine Heißprägevorrichtung, bei der die erste und zweite Prägestation mit derselben Transferfolie betrieben werden. Die Heißprägevorrichtung umfasst eine Vorratsrolle 31, von der eine Substratbahn 30 abgerollt wird, eine erste Prägestation 1 und eine zweite Prägestation 2, welche das Substrat 30 in dieser Reihenfolge durchläuft, und eine Speicherrolle 32, auf welche die zweifach beprägte Substratbahn 30 aufgerollt wird. Bevor die Substratbahn 30 in die erste Prägestation 1 einläuft, wird sie mit einer als Transferfolie ausgebildeten ersten Prägefolie 10 zusammengeführt, die von einer ersten Abwickelrolle 11 abgerollt wird. In der schematischen Zeichnung ist zur Vereinfachung lediglich eine einzige erste Abwickelrolle 11 dargestellt, in der Praxis sind aber in der Regel mehrere erste Abwickelrollen parallel angeordnet, entsprechend der Anzahl der auf die Substratbahn 30 aufzuprägenden ersten Prägefolien.

Die Substratbahn 30 mit der ihr aufliegenden Transferfolie 10 wird um eine beheizte Prägewalze der ersten Prägestation 1 geführt und durch Andruckrollen mit einem einstellbaren Druck gegeneinander und gegen die beheizte Oberfläche der Prägewalze gedrückt. Die Oberfläche der Prägewalze ist dabei so ausgebildet, z. B. mit Erhebungen und Vertiefungen, und dass lediglich Teilbereiche der Transferfolie 10 an der Prägewalze anliegen. Durch den Druck und die Wärme, die in der ersten Prägestation 1 auf die an der Prägewalze anliegenden Teilbereiche der Substratbahn 30 mit der ihr aufliegenden Transferfolie 10 wirken, werden eine Klebstoffschicht, die auf der dem Substrat 30 zugewandten Seite der Transferfolie 10 angeordnet ist, und eine Ablöseschicht der Transferfolie 10 bereichsweise aktiviert. Dadurch verbinden die aktivierten Bereiche der Klebstoffschicht eine Übertragungslage der Transferfolie 10 partiell mit der Substratbahn 30, und die Transferfolie 10 kann von den mit dem Substrat 30 verklebten Teilbereichen der Übertragungslage abgelöst werden, nachdem die Substratbahn 30 die erste Prägestation 1 durchlaufen hat. Dieses Ablösen erfolgt dadurch, dass die Transferfolie 10 mit den noch nicht übertragenen Bereichen der Übertragungslage mittels einer Umlenkrolle von der Substratbahn 30 weg und zu einer Auslenkrolle 34 geführt wird, die sich in einem einstellbaren Abstand von der Ebene der Substratbahn 30 befindet. Von dort wird die Transferfolie 10 wieder zurück in die Ebene der Substratbahn 30 geführt, so dass sie erneut auf der einfach beprägten Substratbahn 30 aufliegt, wenn sie in die zweite Prägestation 2 einläuft.

Durch den einstellbaren Abstand der Auslenkrolle 34 von der Substratbahn 30 wird eine definierte Verschiebung der Transferfolie 10 relativ zu der Längsrichtung der Substratbahn 30 erzielt. Somit kann die Position der noch nicht übertragenen Bereiche der Übertragungslage der Transferfolie 10 relativ zu der Substratbahn 30 eingestellt werden. Beim Prägevorgang in der zweiten Prägestation 2 werden dann zumindest Teilbereiche der noch nicht übertragenen Bereiche der Übertragungslage der Transferfolie 10 auf vorgegebene Stellen der Substratbahn 30 übertragen. Die nach dem Verlassen der zweiten Prägestation 2 zweifach beprägte Substratbahn 30 wird schließlich auf die Speicherrolle 32 aufgewickelt. Zwischen der ersten Prägestation 1 und der zweiten Prägestation 2 ist eine Wendestation vorgesehen, sodass die Prägung an der zweiten Prägestation 2 auf der der ersten Prägung gegenüberliegenden Seite des Substrats 30 vorgenommen wird und als Ergebnis ein beidseitig beprägtes Substrat unter Verwendung einer einzigen Transferfolie vorliegt.

Es ist auch möglich, das Ablösen der Transferfolie 10 nach der ersten Prägestation 1 zu unterlassen, sondern erst nach der zweiten Prägestation 2 durchzuführen. Dies ist insbesondere dann von Vorteil, wenn in der ersten Prägestation 1 eine vollflächige Übertragung der Übertragungslage der Transferfolie 10 stattfindet, d. h. die Klebstoffschicht der Transferfolie 10 vollflächig durch den einwirkenden Druck und Wärme aktiviert wird. In der zweiten Prägestation 2 wird anschließend die gesamte Fläche der Transferfolie 10 nochmals Druck und Wärme ausgesetzt, wodurch eine nochmalige teilweise oder vollständige Aktivierung der Klebstoffschicht der Transferfolie 10 erfolgt und eine Verbesserung der Haftung der Übertragungslage der Transferfolie 10 auf dem Substrat 30 erreicht werden kann. Dies ist insbesondere dann von Vorteil, wenn die Arbeitsgeschwindigkeit beim Prägen sehr hoch gewählt werden soll. Durch die zweifache Aktivierung der Klebstoffschicht der Transferfolie 10 kann trotz sehr hoher Arbeitsgeschwindigkeit eine ausreichende Haftung der Übertragungslage der Transferfolie 10 auf dem Substrat 30 erreicht werden, wobei die Haftung bei derselben Arbeitsgeschwindigkeit mit nur einer Prägestation nicht ausreichen würde.

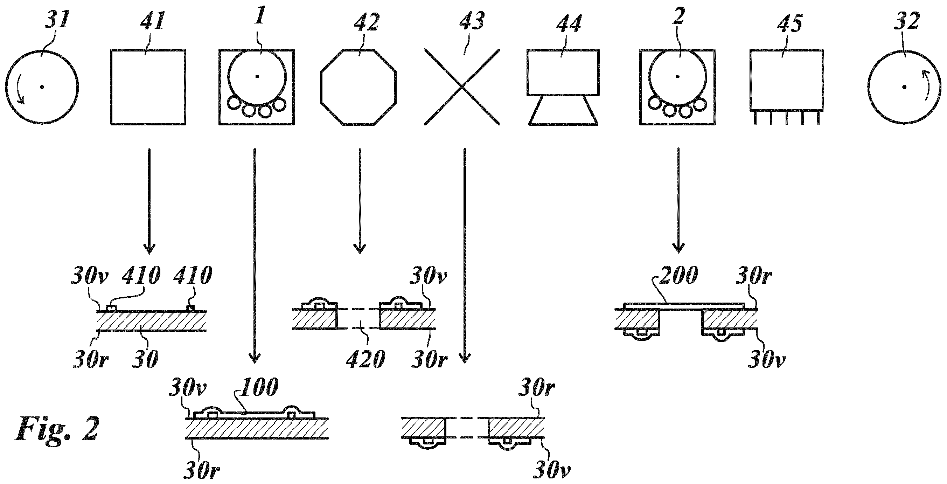

Fig. 2 zeigt in einer schematischen Darstellung eine beispielhafte Abfolge verschiedener Stationen einer Heißprägevorrichtung, die in der Reihenfolge von links nach rechts von einer Substratbahn 30 durchlaufen werden, sowie darunter Schnitte durch die Substratbahn 30 mit den entsprechenden Applikationen. Zunächst wird die Substratbahn 30 von einer Vorratsrolle 31 abgerollt. Danach durchläuft die Substratbahn 30 ein Druckwerk 41, in dem eine Druckschicht 410 auf das Substrat 30 aufgedruckt wird, z. B. ein Muster von Guillochen in Stahltiefdruck.

Danach durchläuft die Substratbahn eine erste Prägestation 1, in der eine erste Prägeschicht 100 auf einer ersten Seite 30v des Substrats appliziert wird. Danach erzeugt eine Stanze 42 in dem einfach beprägten Substrat eine Fensteröffnung 420, die sowohl die Substratbahn als auch die erste Prägeschicht 100 vollständig durchdringt.

Im darauf folgenden Schritt wird die Substratbahn in einer Wendestation 43 gedreht. Nachfolgend detektiert ein optischer Sensor 44 die genaue Lage der Fensteröffnung 420 und liefert die Lagekoordinaten an eine Regelungseinrichtung, durch die eine nachfolgende Prägung in einer zweiten Prägestation 2 gesteuert wird. Eine zweite Prägeschicht 200 wird auf der der ersten Seite 30v gegenüberliegenden zweiten Seite 30r des Substrats genau über der Fensteröffnung 420 appliziert, so dass die Fensteröffnung 420 durch die zweite Prägeschicht 200 verschlossen wird. In einem darauffolgenden Schritt wird die Substratbahn in einer Befeuchtungsstation 45 rückbefeuchtet. Abschließend wird die zweifach beprägte Substratbahn 30 auf eine Speicherrolle 32 aufgerollt.

Es ist möglich, dass die Heißprägevorrichtung außerdem eine Positionierungseinheit, vorzugsweise in Form einer verstellbaren Auslenkrolle, umfasst, die zur Ausrichtung und Korrektur einer Position einer zweiten Prägefolie relativ zur Substratbahn dient. Beispielsweise ist diese Positionierungseinheit zwischen dem Sensor 44 und der zweiten Prägestation 2 positioniert.

Es ist außerdem möglich, dass die Heißprägevorrichtung zudem eine Strahlungseinheit, vorzugsweise eine UV-Lampe oder eine Elektronenquelle, umfasst, die zur Bestrahlung des Substrats dient, um ein auf dem Substrat angeordnetes aushärtbares Material, z.B. eine Lackschicht, zu härten. Beispielsweise ist diese Strahlungseinheit bezogen auf die Laufrichtung des Substrats 30 nach dem Druckwerk 41 oder nach der ersten Prägestation 1 positioniert, wo sie eine aushärtbare Druckschicht 410 und eine darüber geprägte, aushärtbare Prägeschicht 100 mittels Strahlung härtet.

Weiter ist es möglich, dass die Heißprägevorrichtung eine Bestückungseinheit umfasst, die zur Platzierung mindestens eines funktionellen Elements auf dem Substrat dient. Beispielsweise ist Bestückungseinheit vor einer Prägestation 1, 2 positioniert, um ein LC-Element oder ein IC-Element auf dem Substrat zu deponieren, welches nachfolgend in der Prägestation 1, 2 mit einer Folienschicht 100, 200 überprägt wird.

Fig. 3 zeigt einen schematischen Schnitt einer Prägewalze 5 einer ersten Prägestation mit acht an der Prägewalze 5 anliegenden Andruckrollen 51. Eine flexible Substratbahn 30 wird hier von einer Vorratsrolle 11 abgezogen, mit einer von einer Abwickelrolle 11 abgezogenen Transferfolie 10, die aus einer Trägerfolie und der Übertragungslage aufgebaut ist, über Umlenkrollen 36 zusammengeführt und durch einen Spalt zwischen der Prägewalze 5 und den Andruckrollen 51 gefördert. Die Andruckrollen 51 werden gegen die Transferfolie 10, die Substratbahn 30 und die Prägewalze 5 gedrückt, so dass der erforderliche Druck zur Übertragung der Übertragungslage der Transferfolie 10 auf die Substratbahn 30 erzeugt wird. Dabei sind die Andruckrollen 51 insbesondere paarweise derart ansteuerbar, dass eine bestimmte Anzahl von Andruckrollen 51, z. B. zwei, vier, sechs oder acht Andruckrollen, gegen die Prägewalze 5 drückt und dadurch je nach Applikationsart und Applikationsgeschwindigkeit der Prägedruck optimal eingestellt werden kann. Die Andruckrollen 51 sind dabei derart angeordnet, dass ca. ein Drittel der Prägewalze 5 von Substratbahn 30 und Transferfolie 10 umschlungen wird und ein sogenannter Rollenkorb gebildet wird, der den unteren Teil der Prägewalze 5 umschließt. Somit wird auch die Substratbahn 30 mit der ihr aufliegenden Prägefolie um den unteren Teil der Prägewalze 5 geführt. Diese Bahnführung ist gegenüber einer Bahnführung um den oberen Teil der Prägewalze 5 von Vorteil, da dadurch überschüssige Wärme, die während des Prägevorgangs freigesetzt wird, durch Konvektion effizienter abgeführt werden.

Nach Verlassen der Stützwalze 5 wird die bereichsweise oder vollflächig mit der Übertragungslage versehene Substratbahn 30 mittels einer Ablösekante 35 von der Trägerfolie 10 und gegebenenfalls nicht übertragenen Bereichen der Übertragungslage getrennt. Die Trägerfolie 10 wird auf eine Aufwickelrolle 12 aufgespult. Die einfach beprägte Substratbahn 30 wird in Richtung zu einer zweiten Prägestation geführt, die analog zu der ersten Prägestation funktioniert.

Die Andruckkraft der Andruckrollen 51 an die Prägewalze beeinflusst die Haftung einer Übertragungslage oder einer Laminierfolie an der Substratbahn. Die Andruckkraft kann mittels Tellerfedern, Stellzylinder oder durch eine hydraulisch oder pneumatisch kontrollierte gefederte Lagerung der Andruckrollen 51 reguliert werden. Dabei kann die Andruckkraft individuell pro Andruckrollen-Paar reguliert werden, insbesondere in Drehrichtung der Prägewalze in Relation zur Andruckkraft des jeweils benachbarten Andruckrollen-Paars ansteigend oder absteigend reguliert werden.

Weitere Details zu Aufbau und Funktion einer Prägewalze mit Andruckrollen können den Patentdokumenten DE 32 10 551 A1, EP 0 089 494 A2 und WO 2005/120832 A1 entnommen werden, auf die hier verwiesen wird.

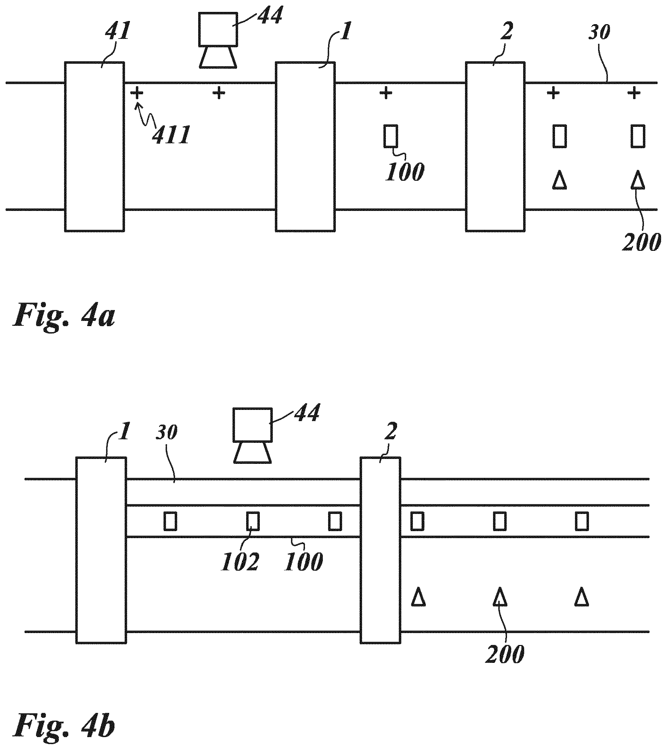

Fig. 4a zeigt eine schematische Draufsicht auf eine Substratbahn 30, die von links nach rechts ein Druckwerk 41, eine erste Prägestation 1 und eine zweite Prägestation 2 durchläuft. Im Druckwerk 41 werden in vorgegebenen Abständen auf den Rand der Substratbahn 30, vorzugsweise außerhalb der Nutzfläche, Registermarken 411 gedruckt, z.B. eine Registermarke 411 pro Nutzenzeile. Es ist möglich, dass gleichzeitig mit den Registermarken 411 ein Sicherheitsdruck auf die Nutzen der Substratbahn 30 gedruckt wird. Handelt es sich jedoch um ein Einfarbendruckwerk, d.h. druckt man die Registermarke mit derselben Farbe wie den Sicherheitsdruck, könnte dies je nach Art des Sicherheitsdruckes dazu führen, dass die Registermarke nicht ausreichenden Kontrast für die Detektion mittels eines Sensors bietet. Um derartige Probleme zu vermeiden, können die Registermarken 411 mit einer separaten, vorzugsweise zum Substrat stark kontrastierenden, Farbe gedruckt werden, um eine bessere optische Detektion mit Sensoren zu ermöglichen.

Ein Druck der Registermarke kann z. B. auch mittels eines Inkjetkopfes bezogen auf die Laufrichtung des Substrats nach dem Substratabwickler, d. h. vor dem Druckwerk 41 erfolgen. Somit kann eine schwarze kontrastreiche Registermarke gedruckt werden. Diese kann dann für einen Insetterprozess (Längsregister) des Druckwerkes 41 verwendet werden. Danach kann die Registermarke, als Alternative zu einer Wasserzeichenmarke, für den Insetterprozess (Längsregister) an Prägestation 1 und Prägestation 2 verwendet werden. An der 2. Prägestation kann auch alternativ zur gedruckten Registermarke oder der Wasserzeichenmarke eine Stanzmarke, welche mittels einer Stanze eingebracht wurde, detektiert werden, um das Längsregister für die Prägestation 2 zu regeln. Ein Sensor 44 erfasst die Lagekoordinaten der aufgedruckten Registermarke 411 und liefert sie an eine Regelungseinrichtung, durch die eine nachfolgende Prägung einer ersten Prägeschicht 100 in der ersten Prägestation 1 registergenau zu den Registermarken 411 gesteuert wird. Eine weitere Prägung einer zweiten Prägeschicht 200 in der zweiten Prägestation 2 registergenau zu den Registermarken 411 wird ebenfalls auf Basis der Lagekoordinaten der aufgedruckten Registermarke 411 gesteuert. Es ist auch möglich, dass statt aufgedruckter Registermarken Steueröffnungen verwendet werden, die z. B. durch ein Stanzwerk in dem Substrat erzeugt werden.

Fig. 4b zeigt eine schematische Draufsicht auf eine Substratbahn 30, die von links nach rechts eine erste Prägestation 1 und eine zweite Prägestation 1 durchläuft. In der ersten Prägestation 1 wird eine erste Prägeschicht 100 in Form eines durchgehenden Folienstreifens auf die Substratbahn 30 geprägt, wobei der Folienstreifen in festen Abständen ein Designmerkmal 102 trägt, z. B. ein bestimmtes geometrisches Muster. Ein Sensor 44 erfasst die Lagekoordinaten der Designmerkmale 102 und liefert sie an eine Regelungseinrichtung, durch die eine nachfolgende Prägung einer zweiten Prägeschicht 200 in der zweiten Prägestation 2 registergenau zu den Designmerkmalen 102 der ersten Prägeschicht 100 gesteuert wird.

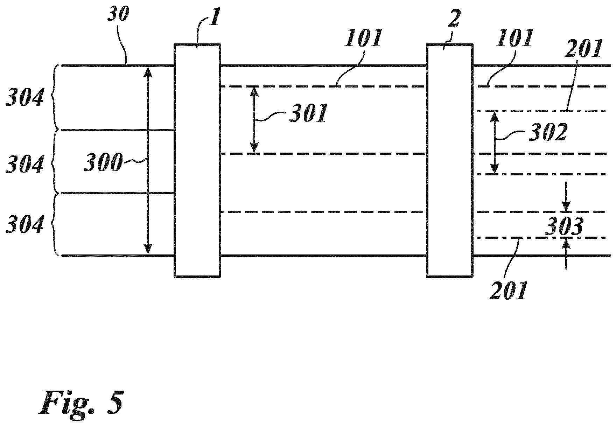

Fig. 5 zeigt eine schematische Draufsicht auf eine Substratbahn 30, die von links nach rechts eine erste Prägestation 1 und eine zweite Prägestation 2 durchläuft. Die Breite 300 der Substratbahn 30, die z. B. 1000 mm beträgt, ist unterteilt in mehrere Nutzenspalten 304. Jeder Nutzenspalte 304 kann dabei eine bestimmte Anzahl von Prägespuren zugeordnet sein, d.h. auf jedem Nutzen sind eine bestimmte Anzahl von Prägeschichten anzubringen. In der ersten Prägestation 1 wird jede Nutzenspalte 304 entlang einer ersten Prägespur 101 mit einer ersten Prägeschicht beprägt. Dabei ist der Abstand 301 zwischen zwei benachbarten ersten Prägespuren 101 aus konstruktiven Gründen begrenzt, beispielsweise auf ca. 100 mm. In der zweiten Prägestation 2 wird jede Nutzenspalte 304 entlang einer zweiten Prägespur 201 mit einer zweiten Prägeschicht beprägt. Dabei ist der Abstand 302 zwischen zwei benachbarten zweiten Prägespuren 201, entsprechend zu den ersten Prägespuren 101, ebenfalls aus konstruktiven Gründen begrenzt, beispielsweise ebenfalls auf ca. 100 mm.

In der zweiten Prägestation 2 können die zweiten Prägespuren 201 in einem beliebig geringen Abstand zu den ersten Prägespuren 101 erzeugt werden, da der Versatz zwischen den ersten und zweiten Prägespuren 101, 201 keiner konstruktiv bedingten Begrenzung unterliegt. Aufgrund des Durchlaufs der Substratbahn 30 durch zwei hintereinander geschaltete Prägestationen 1, 2 kann jede Nutzenspalte, und somit jeder Nutzen, in einem Zug mit unterschiedlichen Prägeschichten beprägt werden, die beliebig gering voneinander beabstandet sind. Gegenüber herkömmlichen Prägevorrichtungen mit nur einer einzigen Prägestation ist somit eine bedeutende Verbesserung der Effizienz möglich.

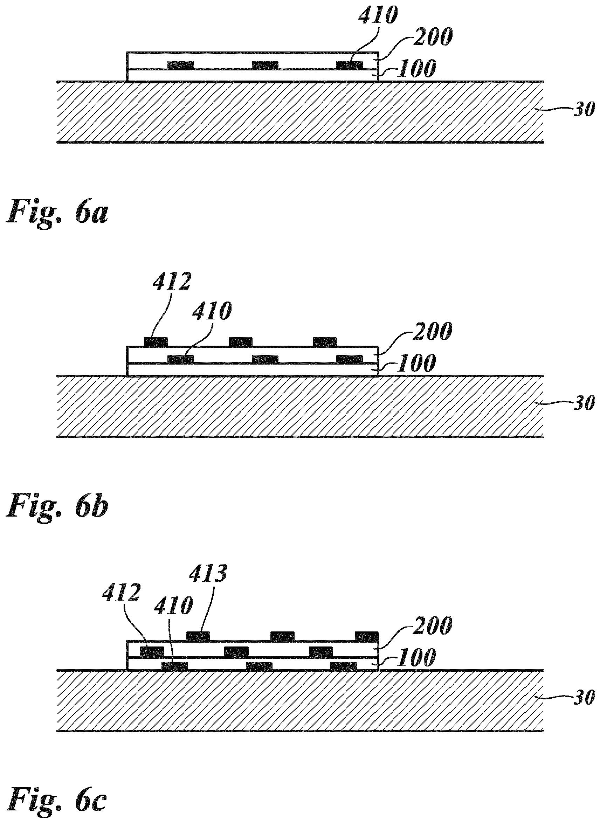

Fig. 6a zeigt einen schematischen Schnitt einer zweifach beprägten und einfach bedruckten Substratbahn 30, die in einer Heißprägevorrichtung wie folgt hergestellt wurde: Nach dem Abwickeln der Substratbahn 30 von einer Vorratsrolle wird die Substratbahn 30 in einer ersten Prägestation mit einer ersten Prägeschicht 100 beprägt, z. B. in Form eines von einer Transferfolie abgelösten Folienpatch. Danach wird die Substratbahn 30 auf ihrer einfach beprägten Seite mit einer Druckschicht 410 bedruckt. Dies kann mittels eines Druckvorgangs in Offset, Siebdruck, Tiefdruck oder Inkjet erfolgen. Die Druckschicht 410 kann eine Information, z. B. eine Wertangabe, ein Portrait oder eine sonstige Abbildung, oder ein schwer nachahmbares Muster sein, z. B. Guillochen oder eine feinlinige Rasterung. Es ist möglich, dass die Druckschicht 410 ausschließlich auf die Prägeschicht 100 ausgetragen wird. Alternativ kann sich die Druckschicht 410 über die Prägeschicht 100 und die unbeprägte Oberfläche der Substratbahn 30 erstrecken. In einem nachfolgenden Schritt wird die Substratbahn 30 in einer zweiten Prägestation mit einer zweiten Prägeschicht 200 beprägt, welche die erste Prägeschicht 100 exakt überdeckt, z. B. in Form eines von einer Transferfolie abgelösten Folienpatch. Durch die Einkapselung zwischen den Prägeschichten 100, 200 ist die Druckschicht 410 somit gegen chemische und physikalische Manipulationen geschützt.

Fig. 6b zeigt einen schematischen Schnitt einer zweifach beprägten und zweifach bedruckten Substratbahn 30. Die Bearbeitungsschritte der Substratbahn 30 entsprechen denen der in Fig. 6a gezeigten Substratbahn, mit dem Unterschied, dass die zweite Prägeschicht 200 in einem abschließenden Schritt bedruckt wird, nämlich in einem weiteren, bezogen auf die Laufrichtung des Substrats nach der zweiten Prägestation angeordneten Druckwerk mit einer zweiten Druckschicht 412, für welche die zu Fig. 6a gegebenen Erläuterungen entsprechend gelten. Durch ein registergenaues Zusammenspiel der ersten und zweiten Druckschichten 410, 412 können optische und funktionale Effekte erzeugt werden.

Fig. 6c zeigt einen schematischen Schnitt einer zweifach beprägten und dreifach bedruckten Substratbahn 30, die in einer Heißprägevorrichtung wie folgt hergestellt wurde: Nach dem Abwickeln der Substratbahn 30 von einer Vorratsrolle wird die Substratbahn 30 in einem ersten Druckwerk mit einer ersten Druckschicht 410 bedruckt. Nachfolgend wird die erste Druckschicht 410 in einer ersten Prägestation mit einer ersten Prägeschicht 100 überprägt. Danach wird die erste Prägeschicht 100 mit einer zweiten Druckschicht 412 bedruckt. In einem nachfolgenden Schritt wird die zweite Druckschicht 412 in einer zweiten Prägestation mit einer zweiten Prägeschicht 200 beprägt, welche die erste Prägeschicht 100 exakt überdeckt. Die drei Druckschichten 410, 412, 413 können aus demselben Druckmaterial, z. B. derselben Farbe, bestehen oder aus unterschiedlichen Druckmaterialien. Es ist beispielsweise möglich, dass die erste Druckschicht 410 eine dunkle Tinte ist, mit der eine Information wie ein Wort oder eine Ziffer auf dem Papiersubstrat aufgedruckt wird. Die zweite und dritte Druckschicht 412, 413 können unterschiedlich eingefärbte Lacke sein, welche zusätzliche Effekte zeigen, z. B. Fluoreszenz. Durch ein registergenaues Zusammenspiel der drei Druckschichten 410, 412, 413 können optische und funktionale Effekte erzeugt werden.

Es ist auch möglich, dass benachbarte Schichten der in Fig. 6a-c gezeigten Schichten, z. B. die in Fig. 6b gezeigte erste Druckschicht 410 und zweite Prägeschicht 200, jeweils noch nicht vollständig ausgehärtete Materialien umfassen, die miteinander reagieren, nachdem die benachbarten Schichten aufgeprägt oder -druckt wurden. Erst nach deren Applikation erfolgt eine Endhärtung in einer Härtungsstation der Vorrichtung, z. B. einer UV-Bestrahlungseinheit. Bis zu ihrer Endhärtung wechselwirkt ein in der ersten Druckschicht 410 enthaltender erster Stoff mit einem in der zweiten Prägeschicht 200 enthaltenden zweiten Stoff zu einem Reaktionszustand, der durch die Bestrahlung fixiert wird.

Die in den Fig. 6a - 6c gezeigten Schichtaufbauten können auch eine Fensteröffnung in der Substratbahn 30 zumindest teilweise verschließen oder überdecken.

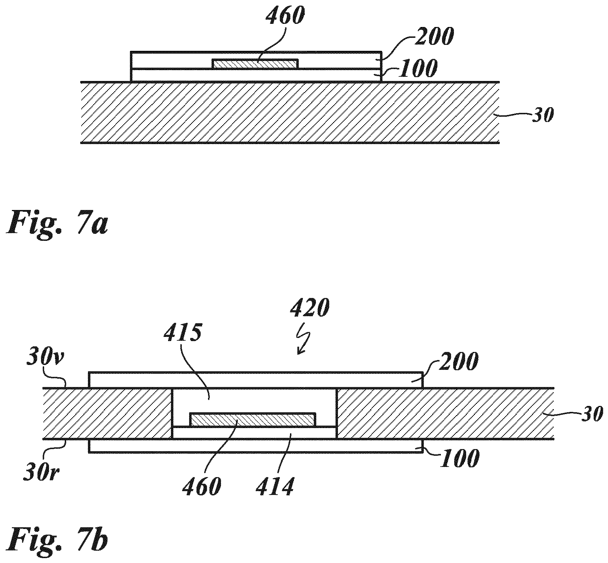

Fig. 7a zeigt einen schematischen Schnitt einer zweifach beprägten Substratbahn 30, die in einer Heißprägevorrichtung wie folgt hergestellt wurde: Nach dem Abwickeln der Substratbahn 30 von einer Vorratsrolle wird die Substratbahn 30 in einer ersten Prägestation mit einer ersten Prägeschicht 100 beprägt. Danach wird in einer Bestückungsstation der Vorrichtung ein funktionelles Element 460, z. B. ein IC-Chip oder ein LC-Display, mittig auf die erste Prägeschicht 100 aufgesetzt, vorzugsweise mittels einer zuvor auf die erste Prägeschicht 100 ausgetragenen Klebstoffschicht fixiert, und schließlich in einem nachfolgenden Schritt das funktionelle Element 460 in einer zweiten Prägestation mit einer zweiten Prägeschicht 200 beprägt, welche die erste Prägeschicht 100 exakt überdeckt. Durch die Einkapselung zwischen den Prägeschichten 100, 200 ist das funktionelle Element 460 somit gegen chemische und physikalische Manipulationen geschützt.

Fig. 7b zeigt einen schematischen Schnitt einer zweifach beprägten Substratbahn 30, die in einer Heißprägevorrichtung wie folgt hergestellt wurde: Nach dem Abwickeln der Substratbahn 30 von einer Vorratsrolle wird in einer Stanzeinheit in der Substratbahn 30 eine Fensteröffnung 420 ausgebildet. Nachfolgend wird in einer ersten Prägestation die Fensteröffnung 420 mit einer ersten Prägeschicht 100 verschlossen, die auf die Rückseite 30r des Substrats 30 aufgeprägt wird. Nachfolgend durchläuft die Substratbahn 30 eine Wendestation 43, in der sie gewendet wird. Danach wird in einer Bestückungsstation der Vorrichtung ein funktionelles Element 460, z. B. ein IC-Chip oder ein LC-Display, insbesondere mittig in die Fensteröffnung 420 eingesetzt und kann insbesondere mittels einer optionalen Klebstoffschicht 414 an der ersten Prägeschicht 100 fixiert werden. In einem optionalen nachfolgenden Schritt kann in einem Druckwerk der verbleibende Raum der Fensteröffnung 420 mit einem Füllmaterial 415 aufgefüllt werden, z. B. einem transparenten Kunststofflack. Schließlich wird in einer zweiten Prägestation die Fensteröffnung 420 mit einer zweiten Prägeschicht 200 verschlossen, die auf die Vorderseite 30v des Substrats 30 aufgeprägt wird. Durch die Einkapselung zwischen den Prägeschichten 100, 200 ist das funktionelle Element 460 gegen chemische und physikalische Manipulationen geschützt. Außerdem wird durch die Positionierung des funktionellen Elements 460 in der Fensteröffnung 420 eine unerwünschte Verdickung des fertigen Substrats im Bereich des funktionellen Elements 460 vermieden oder verringert.

### Bezugszeichenliste

- 1: erste Prägestation
- 2: zweite Prägestation
- 5: Prägewalze
- 10: erste Prägefolie
- 11: erste Abwickelrolle
- 12: erste Aufwickelrolle
- 20: zweite Prägefolie
- 21: zweite Abwickelrolle
- 22: zweite Aufwickelrolle
- 30: Substrat, Substratbahn
- 30v: Vorderseite
- 30r: Rückseite
- 31: Vorratsrolle
- 32: Speicherrolle
- 33: Laufrichtung der Substratbahn
- 34: Auslenkrolle
- 35: Ablösekante
- 36: Umlenkrolle
- 41: Druckwerk
- 42: Stanze
- 43: Wendestation
- 44: Sensor
- 45: Befeuchtungsstation
- 51: Andruckrolle
- 100: erste Prägeschicht
- 101: erste Prägespur
- 102: Designmerkmal
- 200: zweite Prägeschicht
- 201: zweite Prägespur
- 300: Breite der Substratbahn
- 301: Abstand benachbarter erster Prägespuren
- 302: Abstand benachbarter zweiter Prägespuren
- 303: Abstand erster und zweiter Prägespuren
- 304: Nutzenspalte
- 410: Druckschicht, (erste)
- 411: Registermarke
- 412: zweite Druckschicht
- 413: dritte Druckschicht
- 414: Klebstoffschicht
- 415: Füllmaterial
- 420: Fensteröffnung
- 460: funktionelles Element

## Patentansprüche

1. Verfahren zum Heißprägen mindestens eines Teils mindestens einer bandförmigen Prägefolie (10, 20) auf ein bandförmiges Substrat (30), wobei das zu beprägende Substrat (30) mit einer Prägefolie (10, 20) der mindestens einen Prägefolie (10, 20) zusammengeführt wird,
das Substrat (30) und die ihm aufliegende Prägefolie (10, 20) am Umfang einer ersten beheizten Prägewalze (5) entlang geführt werden, wobei in einer ersten Prägung das Substrat (30) und die ihm aufliegende Prägefolie (10, 20) durch wenigstens eine am Umfang der ersten Prägewalze (5) angeordnete erste Andruckrolle (51) gegeneinander und gegen die beheizte Oberfläche der ersten Prägewalze (5) gedrückt werden und eine erste Prägeschicht (100) auf das Substrat (30) geprägt wird,
das einfach beprägte Substrat (30) von der ersten Prägewalze (5) weggeführt und bezogen auf die Laufrichtung (33) des Substrats (30) nach der ersten Prägewalze (5) wiederum mit derselben oder einer weiteren Prägefolie (10, 20) der mindestens einen Prägefolie (10, 20) zusammengeführt wird,
das einfach beprägte Substrat (30) und die ihm aufliegende Prägefolie (10, 20) am Umfang einer zweiten beheizten Prägewalze (5) entlang geführt wird, wobei in einer zweiten Prägung das Substrat (30) und die ihm aufliegende Prägefolie (10, 20) durch wenigstens eine am Umfang der zweiten Prägewalze (5) angeordnete zweite Andruckrolle (51) gegeneinander und gegen die beheizte Oberfläche der zweiten Prägewalze (5) gedrückt werden und eine zweite Prägeschicht (200) auf das Substrat (30) geprägt wird, und
das zweifach beprägte Substrat (30) von der zweiten Prägewalze (5) weggeführt wird,
**dadurch gekennzeichnet,**
**dass** das Substrat (30) zwischen der ersten und zweiten Prägung in einer Wendestation (43) gewendet wird.

2. Verfahren nach Anspruch 1,
**dadurch gekennzeichnet,**
**dass** in der ersten Prägung das Substrat (30) und die ihm aufliegende Prägefolie (10, 20) durch wenigstens zwei um die erste Prägewalze (5) in Abstand voneinander angeordnete erste Andruckrollen (51) gegeneinander und gegen die beheizte Oberfläche der ersten Prägewalze (5) gedrückt werden und die erste Prägeschicht (100) auf das Substrat (30) geprägt wird, oder dass in der zweiten Prägung das Substrat (30) und die ihm aufliegende Prägefolie (10, 20) durch wenigstens zwei um die zweite Prägewalze (5) in Abstand voneinander angeordnete zweite Andruckrollen (51) gegeneinander und gegen die beheizte Oberfläche der zweiten Prägewalze (5) gedrückt werden und die zweite Prägeschicht (200) auf das Substrat (30) geprägt wird.

3. Verfahren nach einem der vorhergehenden Ansprüche,
**dadurch gekennzeichnet,**
**dass** das Substrat (30) vor der ersten Prägung oder zwischen der ersten und zweiten Prägung oder nach der zweiten Prägung mit mindestens einer Druckschicht (410) bedruckt wird, wobei die mindestens eine Druckschicht (410) insbesondere in einem zu beprägenden Bereich oder in einem beprägten Bereich des einfach oder zweifach beprägten Substrats (30) angeordnet wird.

4. Verfahren nach einem der vorhergehenden Ansprüche,
**dadurch gekennzeichnet,**
**dass** die erste und die zweite Prägeschicht (100, 200) auf gegenüberliegende Seiten (30v, 30r) des Substrats (30) aufgeprägt werden.

5. Verfahren nach einem der vorhergehenden Ansprüche,
**dadurch gekennzeichnet,**
**dass** in dem Substrat (30) vor der ersten Prägung oder zwischen der ersten und zweiten Prägung oder nach der zweiten Prägung eine Fensteröffnung (420) ausgebildet wird.

6. Verfahren nach einem der vorhergehenden Ansprüche,
**dadurch gekennzeichnet,**
**dass** vor der ersten Prägung oder zwischen der ersten und zweiten Prägung auf bzw. in dem Substrat (30) eine Registermarke (411) aufgedruckt bzw. eine Steueröffnung (420) ausgebildet wird und eine Positionierung der ersten Prägeschicht (100) oder zweiten Prägeschicht (200) entlang der Laufrichtung (33) des Substrats (30) anhand der Registermarke (411) bzw. der Steueröffnung (420) gesteuert wird oder dass eine Positionierung der zweiten Prägeschicht (200) entlang der Laufrichtung (33) des Substrats (30) anhand eines Designmerkmals oder einer Registermarke (411) gesteuert wird, das bzw. die in der ersten Prägeschicht (100) vorhanden ist.

7. Verfahren nach einem der vorhergehenden Ansprüche,
**dadurch gekennzeichnet,**
**dass** die erste Prägeschicht (100) mindestens eine erste Prägespur (101) auf dem Substrat (30) ausbildet und die zweite Prägeschicht (200) mindestens eine zweite Prägespur (201) auf dem Substrat (30) ausbildet, welche relativ zu der mindestens einen ersten Prägespur (101) quer zur Laufrichtung (33) des Substrats (30) versetzt angeordnet ist.

8. Verfahren nach einem der vorhergehenden Ansprüche,
**dadurch gekennzeichnet,**
**dass** nach der ersten Prägung mindestens ein funktionelles Element (460) auf der ersten Prägeschicht (100) angeordnet wird, welches durch die zweite Prägung zwischen der ersten und zweiten Prägeschicht (100, 200) eingekapselt wird.

9. Verfahren nach Anspruch 8,
**dadurch gekennzeichnet,**
**dass** die erste Prägeschicht (100) auf einer ersten Seite (30v) des Substrats (30) eine das Substrat (30) durchdringende Fensteröffnung (420) überspannend ausgebildet wird, das mindestens ein funktionelles Element (460) von einer der ersten Seite (30v) gegenüberliegenden, zweiten Seite (30r) des Substrats (30) her in der Fensteröffnung (420) angeordnet wird, und die zweite Prägeschicht (200) auf der zweiten Seite (30r) des Substrats (30) die Fensteröffnung (420) überspannend ausgebildet wird.

10. Heißprägevorrichtung, umfassend
einen Substrateinzug, durch den ein zu beprägendes bandförmiges Substrat (30) einziehbar ist;
mindestens eine Bandführung (36), durch die mindestens eine bandförmige Prägefolie (10) mit dem eingezogenen Substrat (30) zusammenführbar ist; eine erste Prägestation (1) mit einer ersten beheizten Prägewalze (5) und wenigstens einer am Umfang der ersten Prägewalze (5) angeordneten ersten Andruckrolle (51), durch die das Substrat (30) und eine ihm aufliegende Prägefolie (10, 20) der mindestens einen Prägefolie (10, 20) am Umfang der ersten Prägewalze (5) entlangführbar und somit zumindest ein Teil der dem Substrat (30) aufliegenden Prägefolie (10, 20) in Form einer ersten Prägeschicht (100) auf das Substrat (30) prägbar ist;eine bezogen auf die Laufrichtung (33) des Substrats (30) nach der ersten Prägestation (1) angeordnete zweite Prägestation (2) mit einer zweiten beheizten Prägewalze (5) und wenigstens einer am Umfang der zweiten Prägewalze (5) angeordneten zweiten Andruckrolle (51), durch die das einfach beprägte Substrat (30) und eine ihm aufliegende Prägefolie (10, 20) der mindestens einen Prägefolie (10, 20) am Umfang der zweiten Prägewalze (5) entlangführbar und somit zumindest ein Teil der dem Substrat (30) aufliegenden Prägefolie (10, 20) in Form einer zweiten Prägeschicht (200) auf das Substrat (30) prägbar ist; und einen Substratauszug, durch den das zweifach beprägte Substrat (30) aus der Vorrichtung entfernbar ist,
**gekennzeichnet durch**
eine zwischen der ersten und zweiten Prägestation (1, 2) angeordnete Wendestation (43) zum Wenden des Substrats (30).

11. Vorrichtung nach Anspruch 10,
**dadurch gekennzeichnet,**
**dass** die erste Prägestation (1) wenigstens zwei um die erste Prägewalze in Abstand voneinander angeordnete erste Andruckrollen (51) umfasst, durch die das Substrat (30) und die ihm aufliegende Prägefolie (10, 20) der mindestens einen Prägefolie (10, 20) am Umfang der ersten Prägewalze (5) entlangführbar und somit zumindest ein Teil der dem Substrat (30) aufliegenden Prägefolie (10, 20) in Form der ersten Prägeschicht (100) auf das Substrat (30) prägbar ist oder dass die zweite Prägestation (2) wenigstens zwei um die zweite Prägewalze in Abstand voneinander angeordnete zweite Andruckrollen (51) umfasst, durch die das einfach beprägte Substrat (30) und die ihm aufliegende Prägefolie (10, 20) der mindestens einen Prägefolie (10, 20) am Umfang der zweiten Prägewalze (5) entlangführbar und somit zumindest ein Teil der dem Substrat (30) aufliegenden Prägefolie (10, 20) in Form der zweiten Prägeschicht (200) auf das Substrat (30) prägbar ist.

12. Vorrichtung nach einem der Ansprüche 10 oder 11,
**gekennzeichnet durch**
mindestens ein bezogen auf die Laufrichtung (33) des Substrats (30) vor der ersten Prägestation (1) oder zwischen der ersten und zweiten Prägestation (1, 2) oder bezogen auf die Laufrichtung (33) des Substrats (30) nach der zweiten Prägestation (2) angeordnetes Druckwerk (41) zum Applizieren mindestens einer Druckschicht (410) auf dem Substrat (30).

13. Vorrichtung nach einem der Ansprüche 10 bis 12,
**gekennzeichnet durch**
eine bezogen auf die Laufrichtung (33) des Substrats (30) vor der ersten Prägestation (1) oder zwischen der ersten und zweiten Prägestation (1, 2) oder bezogen auf die Laufrichtung (33) des Substrats (30) nach der zweiten Prägestation (2) angeordnete Einheit (42) zur Ausbildung mindestens einer Fensteröffnung (420) in dem Substrat (30), oder durch einen Sensor (44) zur Detektierung eines auf bzw. in dem Substrat (30) angeordneten, als Registermarke (411) fungierenden Merkmals oder durcheine Positionierungseinheit zur Ausrichtung oder Korrektur einer Position des Substrats (30) oder der mindestens einen Prägefolie (10, 20) oder durch eine Strahlungseinheit zur Bestrahlung des Substrats (30) oder durch eine Bestückungseinheit zur Platzierung mindestens eines funktionellen Elements (460) auf dem Substrat (30).

## Claims

1. Method for hot stamping at least one part of at least one strip-shaped stamping foil (10, 20) onto a strip-shaped substrate (30), wherein the substrate (30) to be stamped is brought together with a stamping foil (10, 20) of the at least one stamping foil (10, 20),
the substrate (30) and the stamping foil (10, 20) resting thereon are guided along the periphery of a first heated stamping roller (5), wherein, in a first stamping, the substrate (30) and the stamping foil (10, 20) resting thereon are pressed against each other and against the heated surface of the first stamping roller (5) by at least one first pressure roller (51) arranged at the periphery of the first stamping roller (5) and a first stamping layer (100) is stamped onto the substrate (30),
the once-stamped substrate (30) is guided away from the first stamping roller (5) and is again brought together with the same or a further stamping foil (10, 20) of the at least one stamping foil (10, 20) after the first stamping roller (5) in relation to the direction of travel (33) of the substrate (30),
the once-stamped substrate (30) and the stamping foil (10, 20) resting thereon are guided along the periphery of a second heated stamping roller (5), wherein, in a second stamping, the substrate (30) and the stamping foil (10, 20) resting thereon are pressed against each other and against the heated surface of the second stamping roller (5) by at least one second pressure roller (51) arranged on the periphery of the second stamping roller (5) and a second stamping layer (200) is stamped onto the substrate (30), and
the twice-stamped substrate (30) is guided away from the second stamping roller (5), **characterised in that**
the substrate (30) is turned in a turning station (43) between the first and second stamping.

2. Method according to claim 1,
**characterised in that**,
in the first stamping, the substrate (30) and the stamping foil (10, 20) resting thereon are pressed against each other and against the heated surface of the first stamping roller (5) by at least two first pressure rollers (51) arranged around the first stamping roller (5) at a distance from one another and the first stamping layer (100) is stamped onto the substrate (30), or, in the second stamping, the substrate (30) and the stamping foil (10, 20) resting thereon are pressed against each other and against the heated surface of the second stamping roller (5) by at least two second pressure rollers (51) arranged around the second stamping roller (5) at a distance from one another and the second stamping layer (200) is stamped onto the substrate (30).

3. Method according to one of the preceding claims
**characterised in that**
the substrate (30) is printed with at least one printing layer (410) before the first stamping or between the first and second stamping or after the second stamping, wherein the at least one printing layer (410) is arranged in particular in an area to be stamped or in a stamped area of the once- or twice-stamped substrate (30).

4. Method according to one of the preceding claims,
**characterised in that**
the first and the second stamping layer (100, 200) are stamped on opposite sides (30v, 30r) of the substrate (30).

5. Method according to one of the preceding claims,
**characterised in that**
a window opening (420) is formed in the substrate (30) before the first stamping or between the first and second stamping or after the second stamping.

6. Method according to one of the preceding claims,
**characterised in that**,
before the first stamping or between the first and second stamping, a register mark (411) is printed on, or a control opening (420) is formed in, the substrate (30) and a positioning of the first stamping layer (100) or second stamping layer (200) along the direction of travel (33) of the substrate (30) is controlled using the register mark (411) or the control opening (420), or a positioning of the second stamping layer (200) along the direction of travel (33) of the substrate (30) is controlled using a design feature or a register mark (411) that is present in the first stamping layer (100).

7. Method according to one of the preceding claims,
**characterised in that**
the first stamping layer (100) forms at least one first stamping path (101) on the substrate (30) and the second stamping layer (200) forms at least one second stamping path (201) on the substrate (30), which is arranged offset relative to the at least one first stamping path (101) transversely to the direction of travel (33) of the substrate (30).

8. Method according to one of the preceding claims,
**characterised in that**
after the first stamping, at least one functional element (460) is arranged on the first stamping layer (100), which element (460) is encapsulated between the first and second stamping layer (100, 200) by the second stamping.

9. Method according to claim 8,
**characterised in that**
the first stamping layer (100) is formed on a first side (30v) of the substrate (30) spanning a window opening (420) penetrating through the substrate (30), the at least one functional element (460) is arranged in the window opening (420) from a second side (30r) of the substrate (30) opposite the first side (30v), and the second stamping layer (200) is formed on the second side (30r) of the substrate (30) spanning the window opening (420).

10. Hot stamping device comprising
a substrate feeder, through which a strip-shaped substrate (30) to be stamped can be fed;
at least one band guide (36), through which at least one strip-shaped stamping foil (10) can be brought together with the fed substrate (30);
a first stamping station (1) having a first heated stamping roller (5) and at least one first pressure roller (51), arranged on the periphery of the first stamping roller (5), through which the substrate (30) and a stamping foil (10, 20) resting thereon of the one or more stamping foil(s) (10, 20) can be guided along the periphery of the first stamping roller (5) and thus at least part of the stamping foil (10, 20) resting on the substrate (30) can be stamped onto the substrate (30) in the form of a first stamping layer (100);
a second stamping station (2) arranged after the first stamping station (1) in relation to the direction of travel (33) of the substrate (30), with a second heated stamping roller (5) and at least one second pressure roller (51), arranged at the periphery of the second stamping roller (5), through which the once-stamped substrate (30) and a stamping foil (10, 20) resting thereon of the one or more stamping foil(s) (10, 20) can be guided along the periphery of the second stamping roller (5) and thus at least part of the stamping foil (10, 20) resting on the substrate (30) can be stamped onto the substrate (30) in the form of a second stamping layer (200); and
a substrate delivery unit, through which the twice-stamped substrate (30) can be removed from the device,
**characterised by**
a turning station (43) arranged between the first and second stamping station (1, 2) for turning the substrate (30).

11. Device according to claim 10,
**characterised in that**
the first stamping station (1) comprises at least two first pressure rollers (51), arranged around the first stamping roller at a distance from one another, through which the substrate (30) and the stamping foil (10, 20) resting thereon of the at least one stamping foil (10, 20) can be guided along the periphery of the first stamping roller (5) and thus at least one part of the stamping foil (10, 20) resting on the substrate (30) can be stamped onto the substrate (30) in the form of the first stamping layer (100), or the second stamping station (2) comprises at least two second pressure rollers (51), arranged around the second stamping roller at a distance from one another, through which the once-stamped substrate (30) and the stamping foil (10, 20) resting thereon of the at least one stamping foil (10, 20) can be guided along the periphery of the second stamping roller (5) and thus at least one part of the stamping foil (10, 20) resting on the substrate (30) can be stamped onto the substrate (30) in the form of the second stamping layer (200).

12. Device according to one of claims 10 or 11,
**characterised by**
at least one printing mechanism (41) arranged before the first stamping station (1) or between the first and second stamping station (1, 2) in relation to the direction of travel (33) of the substrate (30) or after the second stamping station (2) in relation to the direction of travel (33) of the substrate (30), for applying at least one printing layer (410) onto the substrate (30).

13. Device according to one of claims 10 to 12,
**characterised by**
a unit (42) arranged before the first stamping station (1) or between the first and second stamping station (1, 2) in relation to the direction of travel (33) of the substrate (30) or after the second stamping station (2) in relation to the direction of travel (33) of the substrate (30), for forming at least one window opening (420) in the substrate (30), or by a sensor (44) for detecting a feature arranged on or in the substrate (30), said feature functioning as register mark (411), or by a positioning unit for the alignment or correction of a position of the substrate (30) or the at least one stamping foil (10, 20), or by a radiation unit for radiation of the substrate (30), or by a placement unit for placing at least one functional element (460) on the substrate (30).

## Revendications

1. Procédé d'estampage à chaud d'au moins une partie d'au moins une feuille d'estampage en forme de bande (10, 20) sur un substrat en forme de bande (30), dans lequel le substrat à estamper (30) est réuni avec une feuille d'estampage (10, 20) de l'au moins une feuille d'estampage (10, 20),
le substrat (30) et la feuille d'estampage (10, 20) reposant sur celui-ci sont guidés le long de la périphérie d'un premier cylindre d'estampage chauffé (5), dans lequel dans un premier estampage, le substrat (30) et la feuille d'estampage (10, 20) reposant sur celui-ci sont pressés l'un contre l'autre par au moins un premier rouleau presseur (51) agencé sur la périphérie du premier cylindre d'estampage (5) et contre la surface chauffée du premier cylindre d'estampage (5) et une première couche d'estampage (100) est estampée sur le substrat (30),
le substrat (30) estampé une fois est éloigné du premier cylindre d'estampage (5) et réuni par rapport au sens de transport (33) du substrat (30) après le premier cylindre d'estampage (5) à son tour avec la même ou une autre feuille d'estampage (10, 20) de l'au moins une feuille d'estampage (10, 20),
le substrat (30) estampé une fois et la feuille d'estampage (10, 20) reposant sur celui-ci sont guidés le long de la périphérie d'un deuxième cylindre d'estampage chauffé (5), dans lequel dans un deuxième estampage, le substrat (30) et la feuille d'estampage (10, 20) reposant sur celui-ci sont pressés l'un contre l'autre par au moins un deuxième rouleau presseur (51) agencé sur la périphérie du deuxième cylindre d'estampage (5) et contre la surface chauffée du deuxième cylindre d'estampage (5) et une deuxième couche d'estampage (200) est estampée sur le substrat (30), et le substrat (30) estampé deux fois est éloigné du deuxième cylindre d'estampage (5),
**caractérisé en ce**
**que** le substrat (30) est retourné entre le premier et deuxième estampage dans une station de retournement (43).

2. Procédé selon la revendication 1,
**caractérisé en ce**
**que** dans le premier estampage, le substrat (30) et la feuille d'estampage (10, 20) reposant sur celui-ci sont pressés l'un contre l'autre par au moins deux premiers rouleaux presseurs (51) agencés à distance l'un de l'autre autour du premier cylindre d'estampage (5) et contre la surface chauffée du premier cylindre d'estampage (5) et la première couche d'estampage (100) est estampée sur le substrat (30), ou que dans le deuxième estampage, le substrat (30) et la feuille d'estampage (10, 20) reposant sur celui-ci sont pressés l'un contre l'autre par au moins deux deuxièmes rouleaux presseurs (51) agencés à distance l'un de l'autre autour du deuxième cylindre d'estampage (5) et contre la surface chauffée du deuxième cylindre d'estampage (5) et la deuxième couche d'estampage (200) est estampée sur le substrat (30).

3. Procédé selon l'une quelconque des revendications précédentes,
**caractérisé en ce**
**que** le substrat (30) avant le premier estampage ou entre le premier et deuxième estampage ou après le deuxième estampage est imprimé avec au moins une couche d'impression (410), dans lequel l'au moins une couche d'impression (410) est agencée en particulier dans une zone à estamper ou dans une zone estampée du substrat (30) estampé une fois ou deux fois.

4. Procédé selon l'une quelconque des revendications précédentes,
**caractérisé en ce**
**que** la première et la deuxième couche d'estampage (100, 200) sont estampées sur des côtés opposés (30v, 30r) du substrat (30).

5. Procédé selon l'une quelconque des revendications précédentes,
**caractérisé en ce**
**que** dans le substrat (30) avant le premier estampage ou entre le premier et deuxième estampage ou après le deuxième estampage, une ouverture de fenêtre (420) est réalisée.

6. Procédé selon l'une quelconque des revendications précédentes,
**caractérisé en ce**
**qu'**avant le premier estampage ou entre le premier et deuxième estampage sur ou dans le substrat (30), une marque de repérage (411) est imprimée ou une ouverture de commande (420) est réalisée et un positionnement de la première couche d'estampage (100) ou de la deuxième couche d'estampage (200) est commandé le long du sens de transport (33) du substrat (30) à l'aide de la marque de repérage (411) ou de l'ouverture de commande (420) ou qu'un positionnement de la deuxième couche d'estampage (200) est commandé le long du sens de transport (33) du substrat (30) à l'aide d'une caractéristique de conception ou d'une marque de repérage (411), qui est présente dans la première couche d'estampage (100).

7. Procédé selon l'une quelconque des revendications précédentes,
**caractérisé en ce**
**que** la première couche d'estampage (100) forme au moins une première trace d'estampage (101) sur le substrat (30) et la deuxième couche d'estampage (200) forme au moins une deuxième trace d'estampage (201) sur le substrat (30), laquelle est agencée de manière décalée par rapport à l'au moins une première trace d'estampage (101) transversalement au sens de transport (33) du substrat (30).

8. Procédé selon l'une quelconque des revendications précédentes,
**caractérisé en ce**
**qu'**après le premier estampage au moins un élément fonctionnel (460) est agencé sur la première couche d'estampage (100), laquelle est encapsulée par le deuxième estampage entre la première et deuxième couche d'estampage (100, 200).

9. Procédé selon la revendication 8,
**caractérisé en ce**
**que** la première couche d'estampage (100) est réalisée sur un premier côté (30v) du substrat (30) en enjambant une ouverture de fenêtre (420) traversant le substrat (30), l'au moins un élément fonctionnel (460) est agencé dans l'ouverture de fenêtre (420) depuis un deuxième côté (30r) du substrat (30) opposé au premier côté (30v), et la deuxième couche d'estampage (200) est réalisée sur le deuxième côté (30r) du substrat (30) en enjambant l'ouverture de fenêtre (420).

10. Dispositif d'estampage, comprenant
une entrée de substrat, par laquelle un substrat en forme de bande à estamper (30) peut être entré ;
au moins un guide de bande (36), par lequel l'au moins une feuille d'estampage en forme de bande (10) peut être réunie avec le substrat entré (30) ;
une première station d'estampage (1) avec un premier cylindre d'estampage chauffé (5) et au moins un premier rouleau presseur (51) agencé sur la périphérie du premier cylindre d'estampage (5), par laquelle le substrat (30) et une feuille d'estampage (10, 20) reposant sur celui-ci de l'au moins une feuille d'estampage (10, 20) peuvent être guidés le long de la périphérie du premier cylindre d'estampage (5) et ainsi au moins une partie de la feuille d'estampage (10, 20) reposant sur le substrat (30) peut être estampée sous la forme d'une première couche d'estampage (100) sur le substrat (30) ; une deuxième station d'estampage (2) agencée par rapport au sens de transport (33) du substrat (30) après la première station d'estampage (1) avec un deuxième cylindre d'estampage chauffé (5) et au moins un deuxième rouleau presseur (51) agencé sur la périphérie du deuxième cylindre d'estampage (5), par laquelle le substrat (30) estampé une fois et une feuille d'estampage (10, 20) reposant sur celui-ci de l'au moins une feuille d'estampage (10, 20) peuvent être guidés le long de la périphérie du deuxième cylindre d'estampage (5) et ainsi au moins une partie de la feuille d'estampage (10, 20) reposant sur le substrat (30) peut être estampée sous la forme d'une deuxième couche d'estampage (200) sur le substrat (30) ; et une sortie de substrat, par laquelle le substrat (30) estampé deux fois peut être retiré du dispositif,
**caractérisé par**
une station de retournement (43) agencée entre la première et deuxième station d'estampage (1, 2) pour retourner le substrat (30).

11. Dispositif selon la revendication 10,
**caractérisé en ce**
**que** la première station d'estampage (1) comprend au moins deux premiers rouleaux presseurs (51) agencés à distance l'un de l'autre autour du premier cylindre d'estampage (5), par laquelle le substrat (30) et la feuille d'estampage (10, 20) reposant sur celui-ci de l'au moins une feuille d'estampage (10, 20) peuvent être guidés le long de la périphérie du premier cylindre d'estampage (5) et ainsi au moins une partie de la feuille d'estampage (10, 20) reposant sur le substrat (30) peut être estampée sous la forme de la première couche d'estampage (100) sur le substrat (30) ou que la deuxième station d'estampage (2) comprend au moins deux deuxièmes rouleaux presseurs (51) agencés à distance l'un de l'autre autour du deuxième cylindre d'estampage, par laquelle le substrat (30) estampé une fois et la feuille d'estampage (10, 20) reposant sur celui-ci de l'au moins une feuille d'estampage (10, 20) peuvent être guidés le long de la périphérie du deuxième cylindre d'estampage (5) et ainsi au moins une partie de la feuille d'estampage (10, 20) reposant sur le substrat (30) peut être estampée sous la forme de la deuxième couche d'estampage (200) sur le substrat (30).

12. Dispositif selon l'une quelconque des revendications 10 ou 11,
**caractérisé par**
au moins un dispositif d'impression (41) agencé par rapport au sens de transport (33) du substrat (30) avant la première station d'estampage (1) ou entre la première et deuxième station d'estampage (1, 2) ou par rapport au sens de transport (33) du substrat (30) après la deuxième station d'estampage (2) pour l'application d'au moins une couche d'impression (410) sur la couche (30).

13. Dispositif selon l'une quelconque des revendications 10 à 12,
**caractérisé par**
une unité (42) agencée par rapport au sens de transport (33) du substrat (30) avant la première station d'estampage (1) ou entre la première et deuxième station d'estampage (1, 2) ou par rapport au sens de transport (33) du substrat (30) après la deuxième station d'estampage (2) pour la réalisation d'au moins une ouverture de fenêtre (420) dans le substrat (30), ou par un capteur (44) pour la détection d'une caractéristique fonctionnant comme marque de repérage (411) agencée sur ou dans le substrat (30) ou par une unité de positionnement pour l'orientation ou la correction d'une position du substrat (30) ou de l'au moins une feuille d'estampage (10, 20) ou par une unité de rayonnement pour l'irradiation du substrat (30) ou par une unité d'équipement pour la mise en place d'au moins un élément fonctionnel (460) sur le substrat (30).
